# FASCICULE DE BREVET EUROPEEN

(11) **EP 1 941 101 B1**
(45) Date de publication et mention de la délivrance du brevet: **11.11.2009**
(21) Numéro de dépôt: 06808335.1
(22) Date de dépôt: 15.09.2006
(51) Int. Cl.: D21H 21/40, B42D 15/10, G06K 19/00, G07D 7/00

(54) **ARTICLE SECURISE, NOTAMMENT UN DOCUMENT DE SECURITE ET/OU DE VALEUR**
SICHERER GEGENSTAND, INSBESONDERE SICHERHEITS- UND/ODER WERTSCHRIFT
SECURE ARTICLE, IN PARTICULAR SECURITY AND/OR VALUABLE DOCUMENT

(30) Priorité: 15.09.2005 FR 0552777
(43) Date de publication de la demande: 09.07.2008
(73) Titulaire: Arjowiggins, 92130 Issy Les Moulineaux (FR)
(72) Inventeur: RANCIEN, Sandrine, F-38140 La Murette (FR)
(74) Mandataire: Tanty, François
(86) Numéro de dépôt international: PCT/FR2006/050897
(87) Numéro de publication internationale: WO 2007/031695

(56) Documents cités:
- EP-A- 0 589 195
- WO-A-2005/025891
- FR-A- 2 765 014
- GB-A- 2 324 065
- US-A- 4 114 032

## Description

La présente invention a notamment pour objet un article sécurisé, notamment un document de sécurité et/ou de valeur, et un matériau destiné à la réalisation d'un tel article.

On connaît des documents de sécurité et/ou de valeur comportant des éléments de sécurité permettant de protéger ces documents contre des tentatives de falsification ou de contrefaçon.

Parmi les éléments de sécurité, certains sont détectables à l'oeil nu, en lumière visible, sans utilisation d'un appareil particulier. Ces éléments de sécurité comportent par exemple un filigrane, des fibres ou planchettes colorées, des fils imprimés, métallisés ou holographiques, des foils holographiques ou des impressions à effet optique variable.

Ces éléments de sécurité sont dits de premier niveau.

D'autres types d'éléments de sécurité sont détectables seulement à l'aide d'un appareil relativement simple tel qu'une lampe émettant dans l'ultraviolet ou l'infrarouge. Ces éléments de sécurité comportent par exemple des fibres, des planchettes, des bandes, des fils ou des particules. Ces éléments de sécurité peuvent être visibles à l'oeil nu ou non, étant par exemple luminescents sous un éclairage d'une lampe de Wood émettant dans une longueur d'onde de 365 nm.

Ces éléments de sécurité sont dits de deuxième niveau.

D'autres types d'éléments de sécurité encore nécessitent pour leur détection un appareil de détection plus sophistiqué. Ces éléments de sécurité sont par exemple capables de générer un signal spécifique lorsqu'ils sont soumis, de manière simultanée ou non, à une ou plusieurs sources d'excitation extérieures. La détection automatique du signal permet d'authentifier, le cas échéant, le document.

Ces éléments de sécurité comportent par exemple des traceurs se présentant sous la forme de matière active, de particules ou de fibres, capables de générer un signal spécifique lorsque ces traceurs sont soumis à une excitation optronique, électrique, magnétique ou électromagnétique.

Ces éléments de sécurité sont dits de troisième niveau.

Des traceurs dispersés de manière aléatoire au sein du document peuvent servir à des fins d'identification en formant une signature unique du document, fondée par exemple sur l'intensité et/ou le type du signal généré par les traceurs, considérés individuellement et/ou ensemble, la densité des traceurs, ou la distribution géographique des traceurs dans une zone prédéfinie du document.

Des traceurs pouvant être utilisés pour l'identification d'un document comportent par exemple des fibres à magnétisme doux dont la réponse à un champ magnétique extérieur est non linéaire, l'aimantation des fibres variant en fonction du cycle d'hystérésis. Un ensemble de fibres présentes dans une zone prédéterminée du document permet de définir une signature unique du document du fait de la répartition, de l'orientation et du nombre aléatoire de fibres présentes dans la zone précitée. Dans le cas d'un passeport et notamment d'une page visa, les fibres magnétiques peuvent être présentes sur une page où la personnalisation relative au porteur du passeport est réalisée. Cette personnalisation selon les recommandations de l'ICAO (*International Civil Aviation Organization*) comporte l'impression d'une ligne codée en bord de page à partir de données de personnalisation. Cette ligne dite OCR (*Optical Character Recognition*) est contrôlée automatiquement par un système de contrôle optique approprié. Le système de contrôle optique peut être adapté de façon à ce que lors de la lecture de la ligne OCR, soit également réalisée une identification du signal généré sous champ magnétique par les fibres magnétiques présentes dans la zone inspectée par le système de contrôle optique.

On peut encore utiliser des traceurs constitués de fibres métalliques ayant une réponse spécifique en réflexion et en transmission à une excitation de type micro-onde.

On connaît également des traceurs commercialisés sous la dénomination Traceless^{™} par la société CREO. Ces traceurs constitués de particules sont invisibles après introduction dans le document à protéger et peuvent être détectés grâce à une réponse électromagnétique spécifique lorsqu'ils sont soumis à une excitation dans le domaine de l'infrarouge. L'identification rendue possible d'un document comportant de telles particules est fondée sur la vérification de la répartition des particules dans une zone prédéfinie, cette vérification étant effectuée notamment à l'aide d'une image des particules observées sous une source électromagnétique adéquate. La zone d'inspection considérée peut s'appuyer par exemple sur le contour d'une lettre qui est imprimée ultérieurement sur le document.

Des particules microscopiques commercialisées sous la dénomination Nanoplex^{®} par la société NANOBARCODES peuvent être utilisées dans un document à des fins d'identification par analyse optique d'une image. Ces particules présentent une forme cylindrique avec des zones de réflectance variable obtenues par un empilement de métaux différents, ce qui permet de créer des codes optiques variés en fonction de la séquence de métaux utilisés. La détection des particules sur un document à des fins d'authentification est réalisée à l'aide d'un microscope optique. L'identification du document peut en outre être réalisée automatiquement en incorporant de manière aléatoire sur celui-ci des particules de codes différents, et en vérifiant par analyse d'image, pour une zone prédéterminée du document, le pourcentage respectif de chaque type de particules et leur distribution spatiale dans la zone précitée.

Pour un document incorporant des particules luminescentes excitables par un rayonnement à 365 nm commercialisées sous la dénomination Polystar^{™} par la société SPECTRA SYSTEMS, l'identification du document est réalisée avec un système portable doté d'une caméra digitale, commercialisée sous la dénomination Vericam^{™}, en analysant l'émission spectrale, à savoir la « couleur » de fluorescence des particules, ainsi que la densité des particules pour chacune des « couleurs ».

La société HYPERLABEL TECHNOLOGIES a développé une matière active. Celle-ci formulée dans une encre est imprimée par impression jet d'encre sur un document ou un article à tracer, sous la forme d'un code microscopique de type code matriciel. Ce code invisible est actuellement imprimé de façon redondante dans certaines parties du document à tracer pour rendre possible le processus d'identification même si le code à la surface du document est partiellement altéré ainsi que pour faciliter ce processus d'identification du fait notamment de la tolérance dans le placement d'un système de lecture sur la zone à contrôler. Le code est lu grâce à un système doté d'une caméra digitale fonctionnant dans l'infrarouge. La zone d'inspection du code imprimé est délimitée grâce à l'impression de marques spécifiques autour de chaque code, chaque code se retrouvant en quelque sorte au milieu d'une case d'une grille dont les intersections sont marquées. Cette façon de délimiter la zone d'inspection par impression peut constituer, dans certains cas, une contrainte.

On connaît, par le document intitulé « Secure fingerprint of packaging and documents without tags, chips or ink » de Russel Cowburn de l'Impérial College of London, un procédé pour lire une signature d'un papier en utilisant un balayage d'une zone du papier afin de déterminer la topographie 3D du papier. La zone du papier balayée s'appuie sur un bord et/ou un coin de papier. Lorsque le bord ou le coin est abîmé, la lecture devient plus difficile, voire impossible.

On connaît par la demande internationale WO 2005/025891 un billet de banque comportant sur une face une bande holographique avec des fenêtres à travers lesquelles des éléments d'identification tels qu'un filigrane ou des particules fluorescentes sont détectables.

On connaît par la demande de brevet US 2004/0113420 une carte comportant un substrat en matière plastique. Des fibres sont dispersées de manière aléatoire sur une face du substrat en étant légèrement pressées dans la masse du substrat. Une couche métallique est formée sur cette face du substrat de manière à recouvrir partiellement les fibres. La couche métallique comporte des fenêtres pour détecter les fibres. L'identification de la carte est réalisée en détectant la présence des fibres à travers les fenêtres précitées par balayage suivant une ou plusieurs droites à l'aide d'un dispositif de détection.

On connaît encore par la demande de brevet FR 2 324 060 un document, en papier ou en matière synthétique, incorporant des fibres magnétiques dispersées de manière aléatoire au sein du document. L'authentification du document s'appuie sur la détection des fibres dans une zone d'exploration, à l'aide d'une tête magnétique.

On connaît par la demande FR 2 765 014 un document en papier incorporant des planchettes magnétiques. Le document comporte un code à barres invisible en relation directe avec la répartition aléatoire des planchettes dans une zone du document.

La demande GB 2 324 065 A divulgue une étiquette incluant des particules dispersées de manière aléatoire. Cette étiquette peut être incorporée dans un billet au moment de sa fabrication, et de ce fait, n'est pas nécessairement visible en réflexion à l'oeil nu ou avec une loupe ou autre accessoire grossissant. Un code associé à la répartition des particules peut être mémorisé dans une base de données avec le numéro de série du billet. Dans cette demande, la position des particules est mesurée dans les deux dimensions par exemple en se repérant par rapport à une ligne, ou dans les trois dimensions.

Le brevet US 4 114 032 décrit un document incorporant des fibres magnétiques, la lecture d'un signal lié à ces fibres s'effectuant selon un trajet particulier.

Il existe notamment un besoin pour améliorer et fiabiliser le procédé d'identification en lecture automatique des traceurs introduits dans un substrat et également pour renforcer encore la protection des documents de sécurité et/ou de valeur contre la falsification et la contrefaçon.

L'invention a ainsi pour objet, selon l'un de ses aspects, un article sécurisé, notamment un document de sécurité et/ou de valeur, comportant :
- au moins un substrat, lequel peut être en matière fibreuse,
- au moins une structure d'authentification,
- au moins une zone d'inspection définie au moins partiellement par la structure d'authentification,
- dans la zone d'inspection, au moins un élément d'identification différent de la structure d'authentification.

La zone d'inspection peut permettre avec au moins une caractéristique, notamment spatiale et/ou physique, dudit au moins un élément d'identification, de fournir une information d'identification.

La structure d'authentification peut être un élément de sécurité de premier niveau, étant visible, notamment en réflexion ou transmission. Par « visible », il faut comprendre qu'elle peut être observée sous lumière naturelle, artificielle, UV ou IR, à l'oeil nu ou éventuellement en s'aidant d'une loupe ou d'un accessoire grossissant. L'observation peut se faire directement sans nécessiter d'analyse d'image.

La structure d'authentification peut délimiter au moins partiellement le contour de la zone d'inspection et/ou servir à repérer la zone d'inspection.

Par « repérer », il faut comprendre que la structure d'authentification peut servir de référentiel dans la détermination d'au moins une caractéristique physique et/ou spatiale de la zone d'inspection, par exemple la distribution spatiale des éléments d'identification. Cette distribution peut être déterminée en prenant un repère (au sens mathématique du terme) défini par la structure d'authentification elle-même, et non par une impression portée sur l'article, par exemple.

De préférence, on associe à l'article au moins une information d'identification ayant un lien avec au moins une caractéristique, notamment spatiale et/ou physique, de la zone d'inspection, et notamment dudit au moins un élément d'identification. L'information d'identification peut être représentative de la distribution des éléments d'identification.

Cette information peut être présente sur l'article, le cas échéant.

Grâce à l'invention, la structure d'authentification peut servir à, d'une part, authentifier l'article sécurisé et, d'autre part, délimiter au moins partiellement la zone d'inspection permettant d'identifier l'article.

Ainsi, la protection de l'article selon l'invention contre une tentative de falsification et/ou de contrefaçon est rendue plus difficile, notamment par rapport à des documents existants, sur lesquels la zone d'inspection est délimitée par un motif imprimé qui peut être falsifié plus facilement.

De plus, l'invention peut permettre d'améliorer et fiabiliser le processus d'identification de traceurs introduits dans le substrat en utilisant une zone d'inspection qui ne repose pas sur une délimitation par impression de contour ou de marques au moyen d'une encre non optiquement variable, une telle délimitation pouvant être sujette à une usure mécanique ou chimique, accidentelle ou non.

Le contour de la zone d'inspection peut, le cas échéant, être délimité physiquement par la structure d'authentification. En variante, la structure d'authentification sert à repérer la zone d'inspection, sans toutefois délimiter physiquement le contour. La zone d'inspection peut être située au sein de la structure d'authentification, coïncider avec elle ou en déborder.

On peut avoir une signature de l'article sécurisé qui soit basée, soit exclusivement sur le ou les éléments d'identification présents dans la zone d'inspection, soit sur la combinaison du ou des éléments d'identification dans la zone d'inspection avec la portion du substrat dans la zone d'inspection.

La structure d'authentification et l'élément d'identification peuvent être rendus solidaires du substrat de diverses manières.

Avantageusement, l'un au moins de la structure d'authentification et de l'élément d'identification est au moins partiellement, notamment entièrement, noyé au sein du substrat, ce qui permet de rendre difficile, voire impossible, une tentative d'extraction de la structure d'authentification ou de l'élément d'identification.

Dans un exemple de mise en oeuvre de l'invention, l'article comporte une pluralité d'éléments d'identification dispersés, notamment de manière aléatoire, au sein de la zone d'inspection et l'information d'identification présente un lien avec une caractéristique, notamment spatiale et/ou physique, de ladite pluralité d'éléments d'identification, pris individuellement ou en groupe.

Le ou les éléments d'identification peuvent, le cas échéant, être agencés pour former un code, par exemple un code matriciel, pouvant être lu par un dispositif de lecture approprié.

La structure d'authentification peut occuper un emplacement prédéterminé ou, en variante, aléatoire de l'article.

Dans un exemple de mise en oeuvre de l'invention, la structure d'authentification est détectable à l'oeil nu, en réflexion et/ou par transparence, en lumière visible.

En variante, la structure d'authentification peut être détectable à l'oeil nu, en réflexion et/ou par transparence, sous un éclairage prédéterminé, notamment ultraviolet, la structure d'authentification étant notamment indétectable en lumière visible.

Les éléments d'identification peuvent, le cas échéant, être indétectables à l'oeil nu, notamment quelle que soit la condition d'éclairage.

Dans un exemple de mise en oeuvre de l'invention, les éléments d'identification peuvent être agencés pour émettre un signal spécifique lorsqu'ils sont soumis à une excitation extérieure, notamment optronique, électromagnétique, électrique, magnétique, thermique ou acoustique.

L'excitation extérieure peut être un rayonnement infrarouge, par exemple.

La caractéristique peut être relative à la nature du ou des éléments d'identification dans la zone d'inspection.

La caractéristique physique liée à l'information d'identification peut correspondre à une caractéristique optique, électromagnétique, électrique, magnétique, thermique, ou acoustique du ou des éléments d'identification dans la zone d'inspection.

En variante, la caractéristique spatiale liée à l'information d'identification peut être relative à la disposition, la taille et/ou la densité par unité de surface ou de volume du ou des éléments d'identification dans la zone d'inspection.

Dans un exemple de mise en oeuvre de l'invention, la structure d'authentification comporte un support d'au moins un élément d'identification.

Le support peut comporter au moins un élément en bande, par exemple en matière plastique, ayant une largeur inférieure à celle de l'article, l'élément en bande étant notamment incorporé au moins partiellement dans un substrat de l'article, notamment un substrat en matière fibreuse.

L'élément en bande peut, si on le souhaite, s'étendre d'un premier bord de l'article jusqu'à un deuxième bord, opposé au premier.

Le substrat peut comporter au moins une fenêtre par laquelle l'élément en bande peut se trouver au moins partiellement exposé à l'extérieur, la zone d'inspection étant alors, par exemple, définie au moins partiellement par la fenêtre.

Le substrat peut comporter, le cas échéant, deux fenêtres, en regard l'une de l'autre et à travers lesquelles l'élément en bande peut être au moins partiellement visible depuis deux faces opposées du substrat.

Le support peut encore comporter au moins une fibre ou une planchette et la zone d'inspection peut être définie au moins partiellement par le contour de la fibre ou de la planchette.

La fibre ou la planchette peut être visible à l'oeil nu.

La fibre ou la planchette peut comporter une pluralité de zones, ayant notamment des propriétés physiques différentes, par exemple des couleurs et/ou réflectances différentes, et formant chacune ou en combinaison un élément d'identification.

Dans un exemple de mise en oeuvre de l'invention, la structure d'authentification comporte au moins une fibre, notamment une fibre luminescente pouvant être détectée par exposition à un rayonnement à 365 nm, cette fibre portant une pluralité de particules, notamment des particules Traceless^{™} de la société CREO, formant ensemble un élément d'identification caractérisé notamment par une réponse spectrale spécifique lorsque la fibre est soumise à un champ électromagnétique donné.

Dans un autre exemple de mise en oeuvre de l'invention, la structure d'authentification comporte au moins une planchette réalisée notamment à base de papier; ayant par exemple une forme en disque et pouvant, si on le souhaite, être colorée. La planchette reçoit avantageusement une impression d'une encre incorporant une matière active de manière à former un code, notamment un code matriciel. Cette encre peut, le cas échéant, être invisible à l'oeil nu. Ce code forme un élément d'identification et la zone d'inspection est définie par le contour de la planchette. L'encre et le code précités peuvent être ceux développés par la société HYPERLABEL TECHNOLOGIES.

Dans un exemple de mise en oeuvre de l'invention, l'article comporte au moins une première structure d'authentification d'un premier type et une pluralité de deuxièmes structures d'authentification d'un deuxième type, différent du premier.

Les deuxièmes structures d'authentification sont de préférence dispersées de manière aléatoire au sein d'une première zone d'inspection définie au moins partiellement par la première structure d'authentification. Ces deuxièmes structures d'authentification définissent, notamment de par leur position, fréquence et/ou répartition par rapport à la première structure, une signature unique permettant d'identifier l'article, laquelle signature résulte de la combinaison des première et deuxièmes structures.

L'une au moins des deuxièmes structures d'authentification peut comporter un support, tel qu'une fibre ou une planchette, d'au moins un élément d'identification.

A l'instar de ce qui est décrit ci-dessus, le contour du support, tel qu'une fibre ou une planchette, définit une deuxième zone d'inspection du ou des éléments d'identification.

On peut ainsi procéder, si nécessaire, à l'authentification de l'article, en se fondant sur les première et deuxièmes structures d'authentification, et à l'identification de l'article, de deux manières différentes grâce aux première et deuxième zones d'inspection.

Le substrat peut comporter, le cas échéant, des fibres, des particules ou des planchettes d'au moins deux types différents, par exemple de nature, de forme, de taille, de section et/ou d'effet visuel différents et/ou encore de type multicomposants, la zone d'inspection étant définie par le contour de l'un au moins de ces éléments.

Dans un exemple de mise en oeuvre de l'invention, les éléments d'identification peuvent être dispersés au sein d'une zone de l'article ayant une superficie inférieure ou supérieure à celle de la structure d'authentification, les éléments d'identification étant par exemple dispersés sur toute la surface de l'article.

L'article peut comporter un substrat, notamment en matière fibreuse, et le substrat peut incorporer ou porter au moins un élément d'identification.

Les éléments d'identification peuvent, le cas échéant, être dispersés, notamment en semis, au sein du substrat, dans une zone de superficie plus faible que la superficie du substrat, cette zone présentant par exemple une forme en bande.

Le cas échéant, l'article comporte plusieurs bandes du type précité, espacées les unes des autres d'un pas prédéfini ou variable, la valeur du pas ou sa fréquence pouvant servir à définir une signature.

Dans un exemple de mise en oeuvre de l'invention, la structure d'authentification et le substrat sont distincts.

La structure d'authentification peut par exemple être déposée sur une face du substrat, et comporter par exemple une bande, un film ou un patch, cette structure d'authentification pouvant être agencée, le cas échéant, pour présenter un effet interférentiel, holographique, métallisé ou non-métallisé.

La structure d'authentification, notamment la bande, le film ou le patch, peut comporter au moins une fenêtre définissant au moins partiellement la zone d'inspection, la fenêtre étant par exemple formée par une zone démétallisée ou une zone perforée de la structure d'authentification.

Dans un exemple de mise en oeuvre de l'invention, la structure d'authentification comporte un revêtement, notamment un couchage tel qu'un couchage iridescent, déposé sur le substrat, le revêtement présentant des zones d'épaisseur variable ou des zones avec des effets interférentiels différents agencées pour définir la zone d'inspection.

Si on le souhaite, l'article, notamment un document, peut comporter un papier bi-jet, un premier jet définissant le substrat incorporant et/ou portant les éléments d'identification et la structure d'authentification comportant au moins une fenêtre réalisée dans un deuxième jet et délimitant au moins partiellement la zone d'inspection.

Dans un exemple de mise en oeuvre de l'invention, la structure d'authentification est réalisée au moins partiellement sur ledit substrat.

La structure d'authentification peut comporter au moins un filigrane réalisé sur le substrat incorporant ou portant le ou les éléments d'identification.

La zone d'inspection peut notamment correspondre à la zone couverte par la structure d'authentification, par exemple le filigrane, ou, en variante, à la surface totale de l'article, à l'exception de la zone couverte par la structure d'authentification.

L'un au moins des éléments d'identification peut être choisi parmi :
- une hétérogénéité dans un substrat de l'article,
- une matière active telle que par exemple une substance chimique absorbant dans l'UV ou des éléments détectables par fluorescence X,
- une particule, notamment luminescente et/ou fluorescente, ou présentant des propriétés de résonance magnétique ou de réflectance prédéfinie,
- une fibre telle qu'une fibre magnétique, notamment une fibre métallique à magnétisme doux,
- la microstructure 3D ou topographie d'un substrat en papier.

Le ou les éléments d'identification peuvent comporter par exemple des particules de deux types différents, ayant par exemple des propriétés de réflectance différentes, l'identification étant alors notamment fondée sur l'analyse des densités respectives en chaque type de particule.

Le ou les éléments d'identification peuvent comporter, le cas échéant, des éléments de taille nanométrique dispersés dans la zone d'inspection, par exemple des nanofibres avec un diamètre par exemple d'environ 150 nm.

L'article selon l'invention est notamment agencé de manière à ce que son authentification et/ou identification ne nécessite aucun prélèvement de matière sur le document.

Lorsque l'article comporte un substrat réalisé en matière plastique, les éléments d'identification peuvent être formés par des hétérogénéités dans le substrat, ces hétérogénéités étant par exemple des manques de matière au sein du substrat.

Le substrat peut comporter par exemple des bulles de gaz dispersées de manière aléatoire dans une zone de ce substrat.

Les éléments d'identification sont par exemple définis par la microstructure 3D ou topographie d'un substrat en papier.

La structure d'authentification peut comporter au moins l'un des éléments suivants :
- un filigrane,
- une fibre apparaissant par exemple colorée en lumière du jour ou seulement sous illumination spécifique, la fibre pouvant avoir une forme cylindrique ou non, avec une section non circulaire par exemple,
- une planchette apparaissant à la lumière du jour ou seulement sous illumination spécifique, la planchette pouvant être par exemple métallisée ou holographique sur toute sa surface ou sur une portion seulement de sa surface, la planchette pouvant avoir une forme circulaire ou non,
- un film ou une bande imprimé, métallisé ou holographique,
- un foil imprimé, métallisé ou holographique,
- une impression à effet optique variable.

La structure d'authentification peut, le cas échéant, être différente d'une impression, notamment d'une encre visible en lumière blanche.

La structure d'authentification peut par exemple être différente d'un code à barres imprimé avec une encre conventionnelle, sans effet optique variable.

La structure d'authentification peut notamment être agencée pour présenter un effet optique variable.

Dans un exemple de mise en oeuvre de l'invention, le ou les éléments d'identification peuvent être présents en semis au sein du substrat, ce dernier étant par exemple laminé sur toute sa surface avec une structure d'authentification se présentant sous forme d'un film de sécurité à effet visuel, par exemple un film holographique.

La structure d'authentification peut comporter une fenêtre ou une zone présentant des propriétés physiques différentes du reste de la structure d'authentification.

La structure d'authentification, par exemple le film, peut comporter au moins une zone, en dehors de la fenêtre, agencée pour faire écran à un signal d'excitation servant à exciter le ou les éléments d'identification présents sur le substrat.

La fenêtre peut correspondre à une zone présentant un réseau lenticulaire.

La délimitation de la zone d'inspection peut ainsi être à la fois de nature optique, notamment par délimitation d'une zone visible, et de nature physique, notamment par l'utilisation d'un matériau qui absorbe ou réfléchit le signal d'excitation en dehors de la zone d'inspection.

La zone d'inspection peut être plus petite que la zone délimitée par la structure d'authentification, la structure d'authentification pouvant, le cas échéant, servir de repère de coordonnées spatiales x, y, z pour repérer la zone d'inspection.

Dans un exemple de mise en oeuvre de l'invention, l'information d'identification comporte la caractéristique spatiale et/ou physique, de manière directement appréhendable ou non, les informations étant par exemple cryptées.

En variante, l'information d'identification permet de récupérer la caractéristique spatiale et/ou physique stockée sur un support distinct de l'article, l'information d'identification comportant par exemple un identifiant de l'article.

L'information d'identification peut contenir ou servir à récupérer une image des éléments d'identification contenus dans la zone d'inspection.

L'article peut, le cas échéant, comporter au moins un support d'information capable de mémoriser l'information d'identification, choisi notamment parmi :
- un dispositif optique, notamment un code à barres,
- un dispositif électronique capable de mémoriser des informations, comprenant notamment une puce électronique,
- une piste magnétique,
- une mémoire optique.

De préférence, l'article comporte au moins une mention apparente. On entend par « mention apparente » notamment un élément d'information, par exemple un texte, une image ou un logo, visible sur l'article.

La mention apparente comporte par exemple au moins un élément de l'état civil d'un individu, notamment le nom, le prénom et la nationalité et/ou un paramètre biométrique, par exemple la taille, le poids et la couleur des cheveux ou des yeux.

La mention apparente peut comporter, le cas échéant, une image, par exemple une photo d'identité.

Lorsque l'article est un document de valeur tel qu'un billet de banque, la mention apparente peut comporter par exemple un numéro de série.

La mention apparente peut être imprimée.

Avantageusement, l'information d'identification permet d'accéder à une information représentative d'au moins une mention apparente, figurant sur l'article. Il est ainsi possible d'établir une relation univoque entre l'article et une ou plusieurs mentions apparentes figurant sur celui-ci.

Dans un exemple de mise en oeuvre de l'invention, l'article comporte au moins un substrat en matière fibreuse, notamment en papier. En variante, l'article peut comporter un substrat en matière plastique.

Dans un exemple de mise en oeuvre de l'invention, l'article comporte :
- au moins un substrat en matière fibreuse,
- éventuellement au moins une couche de surface, notamment à base de liant, déposée sur une face du substrat,
- une pluralité d'hétérogénéités du substrat et/ou de la couche de surface éventuelle, dispersées, notamment de manière aléatoire, au sein du substrat et/ou de la couche de surface éventuelle,
- au moins une information d'authentification et/ou d'identification ayant un lien avec au moins une caractéristique spatiale et/ou physique d'une partie au moins desdites hétérogénéités.

Les hétérogénéités selon l'invention sont notamment différentes d'hétérogénéités dues à l'emploi éventuel de matériau(x) solide(s) différent(s).

Grâce à l'invention, les hétérogénéités du substrat en matière fibreuse et/ou de la couche de surface, dans une zone d'inspection, peuvent être utilisées pour former une signature, notamment une signature tridimensionnelle, associée à l'article. Cette signature peut être unique du fait de la disposition et de la taille aléatoire des hétérogénéités.

De préférence, les hétérogénéités sont générées lors de la formation en phase humide du substrat en matière fibreuse et correspondent à des fluctuations de la densité massique du substrat. Ces fluctuations de densité massique peuvent notamment être provoquées par l'injection de gaz en phase humide, lors de la formation du substrat, et créer des fluctuations de densité optique du substrat.

Les hétérogénéités peuvent par exemple avoir une densité massique inférieure à celle du reste du substrat et former des taches claires visibles en lumière transmise.

Les hétérogénéités peuvent, le cas échéant, être dispersées de manière privilégiée dans une zone définie du substrat, notamment une zone délimitée par un filigrane, par exemple en injectant un ou plusieurs gaz par de petits orifices réalisés par exemple sur des poinçons servant à former le filigrane, fixés sur le cylindre de toile rotatif de la machine papetière.

Lorsque la structure comporte une couche de surface, les hétérogénéités au sein de cette couche sont notamment générées lors de l'enduction de la couche de surface sur le substrat préalablement formé, les hétérogénéités correspondant à des fluctuations de la densité massique dans la couche de surface. Ces fluctuations de la densité massique peuvent être provoquées par exemple par un dégazage de gaz emprisonné(s) dans le substrat lors du séchage, le ou les gaz émis par le substrat pénétrant dans la couche de surface, ou encore par l'injection volontaire de gaz dans la couche de surface encore humide, avant ou lors de son enduction sur le substrat. Ces hétérogénéités dans la couche de surface engendrent des fluctuations de densité optique.

La couche de surface peut notamment être à base de liant, étant avantageusement agencée pour conférer à la structure des caractéristiques d'imprimabilité et/ou des propriétés spécifiques telles qu'un effet optique variable.

Le ou les gaz utilisés peuvent être choisis de manière à interagir avec une ou plusieurs zones réactives du substrat et/ou de la couche de surface éventuelle afin de créer une modification optique et/ou physique au niveau des hétérogénéités. La modification peut correspondre par exemple à la formation d'une tache colorée au niveau d'une hétérogénéité.

L'invention a encore pour objet, selon un autre de ses aspects, un matériau en feuille comportant :
- au moins une première structure d'authentification d'un premier type,
- au moins une première zone d'inspection définie au moins partiellement - par la première structure d'authentification,
- au moins une pluralité de deuxièmes structures d'authentification d'un deuxième type, différent du premier, chaque deuxième structure d'authentification comportant par exemple une fibre ou une planchette, les deuxièmes structures d'authentification étant de préférence dispersées de manière aléatoire au sein de la première zone d'inspection,
- au moins une deuxième zone d'inspection définie au moins partiellement par l'une au moins des deuxièmes structures d'authentification, étant par exemple définie par le contour d'une deuxième structure d'authentification,
- dans la deuxième zone d'inspection, au moins un élément d'identification différent de la deuxième structure d'authentification.

L'invention a encore pour objet, selon un autre de ses aspects, un procédé d'authentification et d'identification d'un article, notamment un document de sécurité et/ou de valeur, l'article comportant :
- au moins une structure d'authentification,
- au moins une zone d'inspection définie au moins partiellement par la structure d'authentification,
- dans la zone d'inspection, au moins un élément d'identification différent de la structure d'authentification.

A l'article est associée au moins une information d'identification ayant un lien avec au moins une caractéristique, notamment spatiale et/ou physique, de la zone d'inspection.

Le procédé comporte une authentification et une identification de l'article, le procédé étant caractérisé par le fait que l'authentification du document comporte les étapes suivantes :
- observer la structure d'authentification, notamment à l'oeil nu, en réflexion et/ou par transparence, dans une condition d'éclairage donnée,
- conclure, grâce à l'observation, quant à l'authenticité de l'article,
- et par le fait que l'identification de l'article comporte les étapes suivantes :
- éventuellement lire l'information d'identification, de manière automatisée ou non,
- comparer la caractéristique de la zone d'inspection de l'article ayant un lien avec l'information d'identification, avec au moins une caractéristique obtenue à partir de la zone d'inspection de l'article,
- conclure, au moins grâce à la comparaison, quant à l'identité de l'article.

La comparaison précitée est par exemple réalisée entre des première et deuxième images, la première ayant un lien avec l'information d'identification et la deuxième étant obtenue à partir de la zone d'inspection de l'article, lors de l'identification.

La comparaison peut encore être réalisée entre des première et deuxième valeurs, la première étant obtenue grâce à l'information d'identification et la deuxième étant mesurée sur la zone d'inspection de l'article.

La caractéristique de la zone d'inspection est par exemple la distribution spatiale d'une pluralité d'éléments d'identification et cette distribution peut être déterminée à partir d'un repère défini par la structure d'authentification et non par une marque imprimée avec une encore non optiquement variable.

L'identification du document peut, le cas échéant, être réalisée de manière automatisée.

Dans un exemple de mise en oeuvre de l'invention, la ou les structures d'authentification sont visibles à l'oeil nu, notamment sans l'aide d'un instrument tel qu'un microscope.

Le procédé peut comporter l'étape suivante :
- repérer la zone d'inspection, notamment par analyse d'image de l'article, par exemple à l'aide d'au moins un capteur, par exemple un ensemble de capteurs, fonctionnant en lumière visible ou en infrarouge.

L'analyse d'image peut par exemple être réalisée à l'aide d'une caméra CCD ou une caméra CMOS.

L'identification de l'article peut comporter l'étape suivante :
- comparer la disposition des éléments d'identification dans la zone d'inspection de l'article avec une image récupérée grâce à l'information d'identification.

L'identification du document peut encore comporter les étapes suivantes :
- mesurer l'intensité d'un signal et/ou déterminer le type de signal généré par les éléments d'identification dans la zone d'inspection, notamment lorsque les éléments d'identification sont soumis à une excitation extérieure,
- comparer l'intensité du signal mesurée et/ou le type de signal avec une donnée récupérée grâce à l'information d'identification.

La détection peut reposer, le cas échéant, sur l'examen d'un phénomène acoustique dans la zone d'inspection.

Les caractéristiques spatiales et/ou physiques servant à la signature sont liées aux éléments d'identification, pris individuellement ou en groupe, et, le cas échéant, également au substrat au voisinage des éléments d'identification, dans la zone d'inspection.

Lorsque l'article comporte au moins une mention apparente, le procédé peut comporter les étapes suivantes :
- comparer une information représentative de la mention apparente avec la mention apparente elle-même figurant sur l'article,
- conclure sur l'authenticité et/ou l'identité de l'article au moins grâce à la comparaison.

La mention apparente peut par exemple être un élément tel que le nom, le prénom ou l'âge, de l'état civil d'un individu.

L'invention a encore pour objet, selon un autre de ses aspects, un système d'authentification et/ou d'identification d'un article sécurisé, notamment un document de sécurité et/ou de valeur, l'article comportant :
- au moins une structure d'authentification,
- au moins une zone d'inspection définie au moins partiellement par la structure d'authentification,
- dans la zone d'inspection, au moins un élément d'identification différent de la structure d'authentification,
- au moins une information d'identification ayant un lien avec au moins une caractéristique, notamment spatiale et/ou physique, de la zone d'inspection, et notamment dudit au moins un élément d'identification,
le système comportant :
- des moyens d'analyse d'image, comportant notamment un dispositif de détection optique, agencés pour repérer la zone d'inspection sur l'article,
- des moyens d'acquisition d'une caractéristique, notamment spatiale et/ou physique, de la zone d'inspection, et notamment du ou des éléments d'identification dans la zone d'inspection repérée par les moyens d'analyse d'image,
- optionnellement, une unité de traitement agencée pour comparer la caractéristique de la zone d'inspection de l'article ayant un lien avec l'information d'identification, avec au moins une caractéristique obtenue grâce aux moyens d'acquisition.

L'invention a encore pour objet, selon l'un de ses aspects, un procédé de fabrication d'un article sécurisé, notamment un document de sécurité et/ou de valeur, à partir d'un matériau en feuille, le matériau en feuille comportant :
- au moins un substrat,
- au moins une structure d'authentification,
- au moins une zone d'inspection définie au moins partiellement par la structure d'authentification,
- dans la zone d'inspection, au moins un élément d'identification, différent de la structure d'authentification,
le procédé comportant l'étape suivante :
- munir le matériau en feuille d'au moins une information d'identification ayant un lien avec au moins une caractéristique, notamment spatiale et/ou physique, de la zone d'inspection, et notamment dudit au moins un élément d'identification de la zone d'inspection.

Le procédé de fabrication précité peut en outre comporter l'étape suivante :
- réaliser au moins une impression sur le matériau en feuille.

L'invention a encore pour objet, selon un autre de ses aspects, un matériau en feuille, notamment pour la mise en oeuvre du procédé précité, comportant :
- au moins un substrat,
- au moins une structure d'authentification solidaire du substrat, de préférence visible en réflexion, notamment une fibre ou une planchette, ou un groupe de fibres et/ou planchettes,
- au moins une zone d'inspection définie au moins partiellement par la structure d'authentification, notamment par le contour de la fibre ou de la planchette,
- dans la zone d'inspection, au moins un élément d'identification, différent de la structure d'authentification, l'élément d'identification comportant des particules ou une matière active.

La structure d'authentification peut ainsi être différente d'une impression, notamment une impression alphanumérique ou un code à barres, réalisée avec une encre non optiquement variable.

La présente invention pourra être mieux comprise à la lecture de la description détaillée qui va suivre, d'exemples de mise en oeuvre non limitatifs de l'invention, et à l'examen du dessin annexé, sur lequel :
- les figures 1 à 3 représentent, schématiquement et partiellement, des documents de sécurité et/ou de valeur conformes à différents exemples de mise en oeuvre de l'invention,
- la figure 4 est une coupe transversale, schématique et partielle, d'un document conforme à un exemple de mise en oeuvre de l'invention,
- les figures 5 et 6 représentent, schématiquement et partiellement, des documents de sécurité et/ou de valeur conformes à d'autres exemples de mise en oeuvre de l'invention,
- les figures 7 et 7A représentent, schématiquement et partiellement, une fibre, respectivement une planchette, pouvant être incorporée dans un document conforme à l'invention,
- la figure 8 représente de manière très schématique un système d'authentification et/ou d'identification conforme à l'invention,
- la figure 9 est un schéma en blocs illustrant différentes étapes d'un procédé d'authentification et/ou d'identification conforme à l'invention,
- la figure 10 illustre, schématiquement et partiellement, une étape de récupération d'informations pour authentifier et/ou identifier un document conforme à l'invention,
- la figure 11 représente, schématiquement et partiellement, des éléments d'identification d'un document conforme à l'invention,
- la figure 12 représente, schématiquement et partiellement, un code matriciel réalisé à partir d'une matière active,
- la figure 13 représente, schématiquement et partiellement, un document conforme à un exemple de mise en oeuvre de l'invention,
- la figure 14 illustre schématiquement, en coupe, un article conforme à un exemple de mise en oeuvre de l'invention, comprenant une couche de surface,
- la figure 15 représente, schématiquement et partiellement, une étape de fabrication d'une couche fibreuse d'un article conforme à l'invention, et
- les figures 16 et 17 illustrent, schématiquement et partiellement, des documents conformes à des exemples de mise en oeuvre de l'invention.

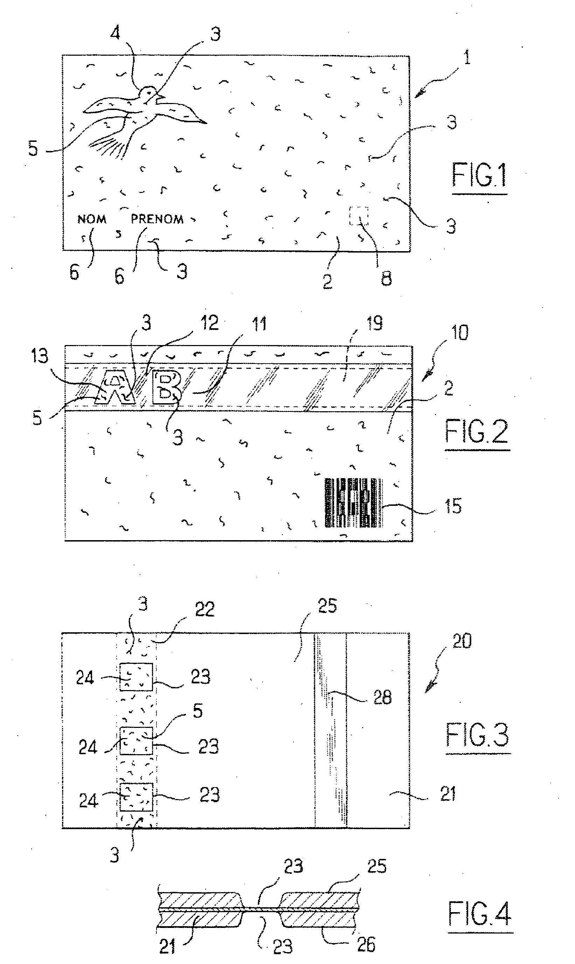

On a représenté sur la figure 1 un document de sécurité et/ou de valeur 1 conforme à l'invention, pouvant constituer l'un des éléments suivants : un billet de banque, un papier de sécurité, un document d'identité, un feuillet ou une couverture de passeport, un visa, un coupon, un document de valeur autre qu'un billet de banque, par exemple un chèque ou une carte de crédit, une étiquette de protection et/ou d'authentification, une étiquette de traçabilité, un dispositif de conditionnement, par exemple pour une ou plusieurs spécialités pharmaceutiques, ce dispositif de conditionnement comportant par exemple un blister.

Le document 1 comporte un substrat 2 réalisé, dans l'exemple considéré, en matière fibreuse, comportant par exemple des fibres de cellulose et/ou des linters de coton et/ou des fibres synthétiques.

En variante, le substrat 2 peut être réalisé en matière plastique.

Dans l'exemple décrit, le substrat 2 incorpore dans sa masse une pluralité d'éléments d'identification 3 dispersés de manière aléatoire sur toute la surface du substrat 2.

Ces éléments d'identification 3 comportent par exemple des particules, notamment luminescentes et/ou fluorescentes, et/ou des fibres telles que des fibres magnétiques, notamment à magnétisme doux, ou des fibres excitables optiquement, notamment par exposition à un rayonnement infrarouge.

Ces éléments d'identification 3 peuvent être sélectionnés de manière à être indétectables à l'oeil nu présentant à cet effet par exemple une taille suffisamment faible ou une réflectance adéquate.

Les éléments d'identification 3 sont agencés pour émettre un signal spécifique lorsqu'ils sont soumis à une excitation extérieure adaptée, notamment optronique, électromagnétique, électrique, magnétique, ou thermique.

Un filigrane 4 définissant une structure d'authentification est réalisé sur le substrat 2, en un emplacement prédéterminé de celui-ci.

Ce filigrane 4 peut par exemple être obtenu par une opération sur la suspension aqueuse de fibres cellulosiques lors de la fabrication du papier. Toute autre technique pour réaliser le filigrane 4 peut naturellement être utilisée, lequel peut être un pseudo-filigrane.

Le contour du filigrane 4 définit intérieurement une zone d'inspection 5.

Les éléments d'identification 3 dispersés de manière aléatoire au sein de cette zone d'inspection 5 définissent une signature unique du document 1.

Le document 1 comporte des mentions apparentes 6, par exemple imprimées sur le substrat 2. Ces mentions apparentes 6 comportent par exemple le nom et le prénom d'un individu. Les mentions apparentes 6 peuvent être de tout type et comporter par exemple une image.

Le document 1 comporte en outre un support d'information 8 comprenant, dans l'exemple considéré, un dispositif électronique ayant une puce électronique capable de mémoriser des données.

Le dispositif électronique 8 peut être fixé sur le substrat 2 de différentes manières, en étant par exemple au moins partiellement ou totalement incorporé au sein de la masse du substrat 2 ou collé sur une face extérieure de celui-ci.

Le support d'information 8 mémorise, d'une part, au moins une caractéristique spatiale et/ou physique des éléments d'identification 3 dispersés dans la zone d'inspection 5, et, d'autre part, des informations représentatives des mentions apparentes figurant sur le document 1.

Les informations mémorisées par le support d'information 8 peuvent être cryptées afin de renforcer la sécurité.

La caractéristique physique liée à l'information d'identification peut correspondre à une caractéristique optique, électromagnétique, électrique, magnétique, ou thermique, du ou des éléments d'identification 3 dans la zone d'inspection 5 et éventuellement de la portion du substrat dans la zone d'inspection 5.

La caractéristique spatiale liée à l'information d'identification peut être relative à la disposition, la taille ou la densité par unité de surface du ou des éléments d'identification 3 dans la zone d'inspection 5.

L'authentification du document 1 peut être réalisée simplement par l'observation, par transparence, du filigrane 4, lequel constitue un élément de sécurité de premier niveau.

L'utilisation d'un appareil spécifique à des fins d'authentification n'est pas nécessaire.

Il peut être souhaitable, le cas échéant, de procéder à l'identification du document, en plus de son authentification.

A cet effet, on fait intervenir la signature unique du document 1 formée par les éléments d'identification 3 dispersés dans la zone d'inspection 4.

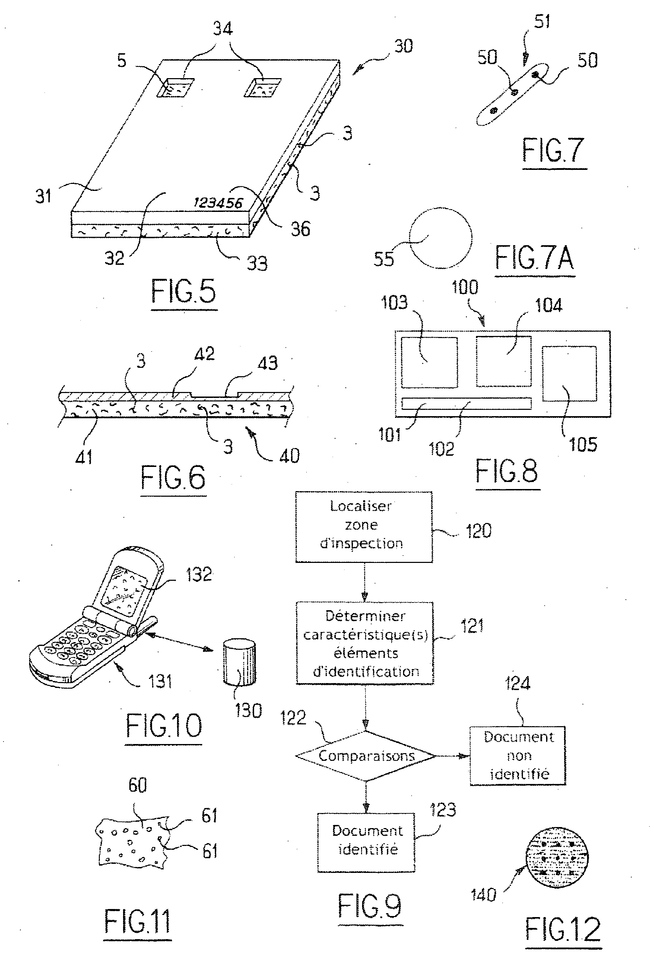

L'identification du document 1 peut être obtenue à l'aide d'un système approprié 100 illustré de manière très schématique sur la figure 8.

Ce système 100 comporte:
- une fente 101 permettant d'introduire le document 1 dans un espace de contrôle 102,
- un dispositif de détection optique 103 comportant par exemple une caméra, le dispositif étant agencé pour repérer, notamment par analyse d'image, la zone d'inspection 5 du document 1 introduit dans l'espace de contrôle 102, ce dispositif fonctionnant par exemple en lumière visible ou infrarouge, et comportant par exemple au moins une diode électroluminescente ou une diode laser,
- des moyens 104 d'acquisition d'une caractéristique spatiale et/ou physique des éléments d'identification 3 dans la zone d'inspection 5 repérée par le dispositif de détection 103, ces moyens 104 pouvant comporter notamment un dispositif tel qu'un capter ou un ensemble de capteurs, pour mesurer l'intensité d'un signal généré par les éléments d'identification 3 présents dans la zone d'inspection 5 lorsqu'ils sont soumis à une excitation extérieure,
- une unité de traitement de données 105 telle qu'un ordinateur, agencée pour comparer la caractéristique des éléments d'identification 3 du document 1 ayant un lien avec l'information d'identification, avec au moins une caractéristique obtenue grâce aux moyens d'acquisition 104.

Dans un exemple de mise en oeuvre de l'invention, le système 100 peut comporter une pluralité de sources d'éclairage, l'une au moins fonctionnant par exemple dans le visible, étant utilisée pour repérer la zone d'inspection 5, et une ou plusieurs autres sources d'éclairage étant utilisées pour créer des excitations multiples du ou des éléments d'identification, ces excitations multiples éventuelles pouvant être simultanées ou successives.

Le système 100 peut comporter, le cas échéant, des filtres pour filtrer des longueurs d'onde d'excitation et/ou d'émission lorsque la source d'excitation est électromagnétique.

Les moyens d'acquisition 104 peuvent comporter un pavé de photodiodes lorsque le signal émis par les éléments d'identification est de type électromagnétique ou encore de capteurs magnétorésistifs dans le cas où le signal est de type magnétique.

Dans une variante non illustrée, le système 100 peut comporter un dispositif de détection comprenant une caméra, ce dispositif étant agencé pour à la fois repérer la zone d'inspection 5 du document 1 et déterminer une caractéristique spatiale telle que la densité surfacique et/ou la distribution spatiale des éléments d'identification 3 présents dans la zone d'inspection 5.

L'identification du document 1 peut comporter les étapes suivantes.

On commence par introduire le document 1 dans l'espace de contrôle 102 du système 100.

Le dispositif de détection optique 103 repère par analyse d'image la zone d'inspection 5 du document 1 (étape 120 à la figure 9), en déterminant par exemple le contour du filigrane 4.

Les moyens d'acquisition 104 déterminent une caractéristique spatiale et/ou physique des éléments d'identification dans la zone d'inspection 5 repérée par le dispositif de détection 103 (étape 121), par exemple en mesurant l'intensité d'un signal généré par les éléments d'identification 3 présents dans la zone d'inspection 5.

L'unité de traitement 105 compare ensuite (étape 122) l'intensité du signal mesurée avec une valeur ayant un lien avec l'information d'identification mémorisée sur le support d'information 8 du document 1.

Lorsque l'identification repose sur une détection optique, et notamment lorsque les moyens d'acquisition 104 comportent une caméra, la comparaison peut porter notamment sur deux images, l'une acquise sur le document 1, au niveau de la zone d'inspection 5, et l'autre récupérée grâce à l'information contenue dans le support d'information 8.

Les informations représentatives des mentions apparentes sont comparées avec les mentions apparentes 6 figurant sur le document 1.

Les comparaisons précitées permettent de vérifier la relation univoque entre les mentions apparentes 6 figurant sur le document 1 et le substrat 2, et donc l'authenticité et l'identité du document 1 (étapes 123 et 124).

Dans un autre exemple de mise en oeuvre de l'invention, les informations utiles à l'identification du document, à savoir celles représentatives de la caractéristique spatiale et/ou physique et d'au moins une mention apparente ne sont pas mémorisées sur le document 1 lui-même, étant stockées sur un support d'information 130 distinct du document 1, comme illustré sur la figure 10.

Ce support d'information 130 peut par exemple être constitué par une base de données d'un système informatique.

L'information d'identification comporte alors un identifiant permettant de récupérer des informations associées au document considéré, mémorisées sur le support d'information 130, à l'aide d'un terminal 131 tel qu'un téléphone portable ou un assistant personnel numérique ou un ordinateur ou tout autre appareil.

Le terminal 131 peut être relié à la base de données 130 par une liaison filaire ou non filaire.

L'identification du document peut alors être effectuée de la manière suivante.

Il est procédé à la lecture de l'identifiant et à la récupération des informations utiles à l'authentification et/ou l'identification du document, à savoir des informations représentatives d'une caractéristique spatiale et/ou physique des éléments d'identification 3 et des mentions apparentes. Pour récupérer les informations précitées, un utilisateur peut transmettre à l'aide du terminal 131 l'identifiant du document vers le système comprenant la base de données 130, qui, en retour, envoie vers le terminal 131 les informations requises, comportant par exemple une image 132 de la zone d'inspection 5.

Les informations récupérées permettent d'identifier le document 1, par comparaison avec la caractéristique spatiale et/ou physique déterminée sur le document et les mentions apparentes figurant sur celui-ci.

Bien entendu, on ne sort pas du cadre de la présente invention lorsque la zone d'inspection est définie par un élément autre qu'un filigrane.

On a illustré sur la figure 2 un document 10 comportant un substrat en matière fibreuse 2 comme décrit dans l'exemple précédent, et un foil 11 déposé sur une face de ce substrat 2.

Le foil 11 est appliqué sur le document 10 par transfert d'une structure multicouche comprenant une couche de libération, par application de chaleur et de pression.

Dans l'exemple illustré, le foil 11 comporte une métallisation 12 et des zones démétallisées 13 pouvant former notamment des motifs, par exemple des lettres de l'alphabet. Ces zones 13 définissent des fenêtres. La zone d'inspection 5 utilisée à des fins d'identification correspond par exemple aux zones démétallisées 13. Dans une variante non illustrée, les zones démétallisées 13 peuvent être remplacées par des zones perforées du foil 11.

Dans l'exemple considéré, les éléments d'identification 3 tels que des fibres sont dispersés, notamment en semis, sur toute la surface du substrat 2. En variante, les fibres 3 sont dispersées sur seulement une zone délimitée 19 du substrat 2. Cette zone 19 présente une forme en bande par exemple.

Les éléments d'identification 3 sont déposés, notamment à l'aide d'une ou de plusieurs buses adéquates, en bande, sur la dispersion cellulosique, lors de la formation du substrat 2, par exemple.

Le foil 11 peut recouvrir, si on le souhaite, entièrement cette zone 19 du substrat 2.

Le foil 11 permet de faire écran, en dehors de la zone d'inspection 5, à un signal d'excitation.

Le document 10 comporte un support d'information 15 constitué par exemple par un code à barres pouvant être du type matriciel, par exemple celui connu sous la dénomination PDF 417, permettant de stocker une quantité d'informations relativement importante.

Dans l'exemple de la figure 1, les éléments d'identification 3 sont dispersés dans la masse du substrat 2, sur toute la surface de celui-ci.

On a représenté sur la figure 3 un document 20 comportant un substrat en matière fibreuse 21 au sein duquel un élément de sécurité en bande 22, notamment en matière plastique, est incorporé lors de la fabrication du substrat 21.

L'élément en bande 22 porte une pluralité d'éléments d'identification 3 dispersés de manière aléatoire sur toute sa surface.

Le substrat 21 comporte des fenêtres 23 laissant dégagées sur une face 25 du document 20 des zones 24 de l'élément en bande 22.

Entre ces zones 24, l'élément en bande 22 est noyé dans la masse du substrat 21.

Dans l'exemple illustré, les fenêtres 23 présentent une forme rectangulaire, avec une largeur inférieure à la largeur de l'élément en bande 22.

Le substrat 21 peut comporter des fenêtres 23 sur une face 25 seulement.

En variante, comme illustré sur la figure 4, le substrat 21 peut comporter des fenêtres 23 en regard laissant dégagé l'élément en bande 22 sur deux faces 25 et 26 opposées du document 20.

On peut se référer notamment au brevet EP 690 939 en ce qui concerne la manière de fabriquer les fenêtres.

La zone d'inspection 5 utilisée à des fins d'identification du document 20 est formée par les zones exposées 24 de l'élément en bande 22, au droit des fenêtres 23 du substrat 21.

Le document 20 comporte un support d'information formé par exemple par une piste magnétique 28 sur laquelle sont mémorisées les informations utiles à l'identification du document 20.

On a représenté sur la figure 5 un document 30 conforme à l'invention, comportant un papier bi-jet 31 formé par un premier jet 32 et un deuxième jet 33. Le premier jet 32 comporte des fenêtres 34 et le deuxième jet 33 incorpore dans sa masse des éléments d'identification 3.

Dans l'exemple illustré, la zone d'inspection 5 est définie par les fenêtres 34.

Les éléments d'identification 3 peuvent être, en variante, déposés entre les deux jets 32 et 33, par exemple par pulvérisation, avant une étape de lamination de ces deux jets 32 et 33.

Le document 30 comporte un identifiant 36 permettant de récupérer depuis le support d'information distinct 130 les informations nécessaires pour l'identification du document 30.

On a illustré sur la figure 6 un document 40 conforme à l'invention, comportant un substrat 41 en matière fibreuse, incorporant une pluralité d'éléments d'identification 3.

Un couchage 42 est déposé sur le substrat 41, ce couchage pouvant être du type iridescent par exemple.

Ce couchage 42 présente une épaisseur variable définissant par exemple des zones d'épaisseur réduite 43 formant des zones d'inspection 5 et ayant un effet optique variable différent de celui de zones voisines.

Les éléments d'identification 3 peuvent être sélectionnés parmi :
- les particules Traceless^{™} de la société CREO,
- les particules Nanoplex^{®} de la société NANOBARCODES,
- les particules Polystar^{™} de la société SPECTRA SYSTEMS,
- les particules Microtag de la société MICROTAG.

### Exemple de structures d'authentification et d'éléments d'identification selon l'invention

On a illustré sur la figure 7 une fibre de sécurité 51 portant des éléments d'identification 50.

La fibre 51 est réalisée de la manière suivante.

Lors du filage d'un fil de viscose destiné à la réalisation des fibres de sécurité 51, on ajoute au mélange maître de viscose, une substance luminescente, par exemple invisible en lumière du jour et fluorescente à 365 nm, utilisable pour l'authentification, ainsi qu'une quantité de particules 50 Traceless^{™} de CREO suffisante pour avoir au moins deux particules Traceless^{™} distinctes pour chaque fibre de 5 mm coupée, à des fins d'identification. Ces fibres coupées sont ensuite introduites en semis dans un substrat en papier. La fibre luminescente 51 définit une structure d'authentification dite de deuxième niveau pouvant être authentifiée à l'aide d'une lampe de Wood. Les éléments d'identification sont définis par les particules Traceless^{™} dispersées dans chaque fibre. Ces particules sont identifiables sur une fibre en comparant la réponse spectrale de la fibre à celle attendue. En cas de doute sur l'authenticité des fibres luminescentes et plus particulièrement en cas de suspicion d'une contrefaçon des fibres luminescentes par impression, une identification des caractéristiques des particules Traceless^{™} dans les fibres de sécurité est réalisée. Dans ce cas, la zone d'inspection 5 est formée par le contour d'une fibre 51.

### Exemple de document de sécurité et/ou de valeur selon l'invention

Afin de renforcer la sécurité du document, celui-ci peut comporter deux types de structures d'authentification. Le substrat du document comporte par exemple, en semis, des fibres luminescentes 51 comprenant des éléments d'identification formés par des particules Traceless^{™} de CREO. Un foil holographique avec des réserves est appliqué sur le substrat en papier. L'identification du document s'appuie, d'une part, sur la détection optique des particules Traceless^{™} prises individuellement, situées dans une zone d'inspection définie par une fibre présente dans une réserve du foil et, d'autre part, sur la distribution des fibres 51 dans la réserve du foil. Une zone d'inspection est donc formée à la fois par le contour de chacune des fibres 51 et par la réserve formée dans le foil. L'identification du document peut ainsi se fonder sur la combinaison des caractéristiques physiques et spatiales des fibres 51 dispersées de façon aléatoire dans la zone délimitée par la réserve dans le foil. On peut acquérir l'image spectrale de cette zone sous excitation infrarouge et la comparer avec celle attendue, à des fins d'identification.

### Autre exemple de structures d'authentification et d'éléments d'identification selon l'invention

On peut utiliser un code matriciel 140 (voir figure 12) réalisé à partir d'une matière active développée par la société HYPERLABEL TECHNOLOGIES. Cette matière active formulée dans une encre invisible à l'oeil nu est imprimée, par impression jet d'encre, sur un papier de faible grammage coloré qui est ensuite découpé pour créer des planchettes, ayant par exemple la forme de disque. L'impression est réalisée de manière à ce que chaque planchette, par exemple de diamètre 2 mm, soit porteuse d'un même code matriciel. Les planchettes colorées, après dispersion dans le papier, destiné par exemple à la réalisation d'une étiquette pour produit de marque, constituent une structure d'authentification dite de premier niveau. Chaque planchette délimite en outre une zone d'inspection pour une sécurité d'identification constituée par le code matriciel. On peut lire le code sur une planchette par exemple avec le stylo caméra scanner fonctionnant dans l'infrarouge développé par HYPERLABEL. Le stylo est relié à une unité de traitement capable de décoder le code matriciel et de restituer les informations enregistrées dans ce code.

### Autre exemple de document de sécurité et/ou de valeur selon l'invention

Les éléments d'identification sont déposés sur un élément en bande incorporé dans un substrat en papier. Les éléments d'identification sont par exemple des particules micrométriques à réflectance variable Nanoplex^{®} commercialisées par la société NANOBARCODES. Un mélange de deux types de particules ayant des propriétés de réflectance différentes est utilisé. L'élément en bande est laminé avec une structure d'authentification telle qu'un foil présentant une zone démétallisée qui sert de zone d'inspection des fibres Nanoplex^{®}. Dans cette zone d'inspection, on réalise de manière automatisée une analyse d'image. Cette analyse repose sur le pourcentage respectif de chaque type de particules ainsi que sur leur distribution dans la zone d'inspection.

L'invention n'est pas limitée aux exemples de mise en oeuvre qui viennent d'être décrits.

Comme illustré sur la figure 11, le document peut comporter un substrat 60 réalisé en matière plastique, par exemple en résine transparente, notamment une résine durcissable, substrat au sein duquel des hétérogénéités 61 sont formées.

Ces hétérogénéités 61 correspondent par exemple à des manques de matière ou des bulles de gaz obtenues lors de la fabrication du substrat 60 et dispersées de manière aléatoire au sein de ce substrat 60.

Les hétérogénéités 61, dans une zone d'inspection définie par exemple par une ou plusieurs fenêtres d'un film ou foil appliqué sur le substrat, forment des éléments d'identification définissant une signature du document.

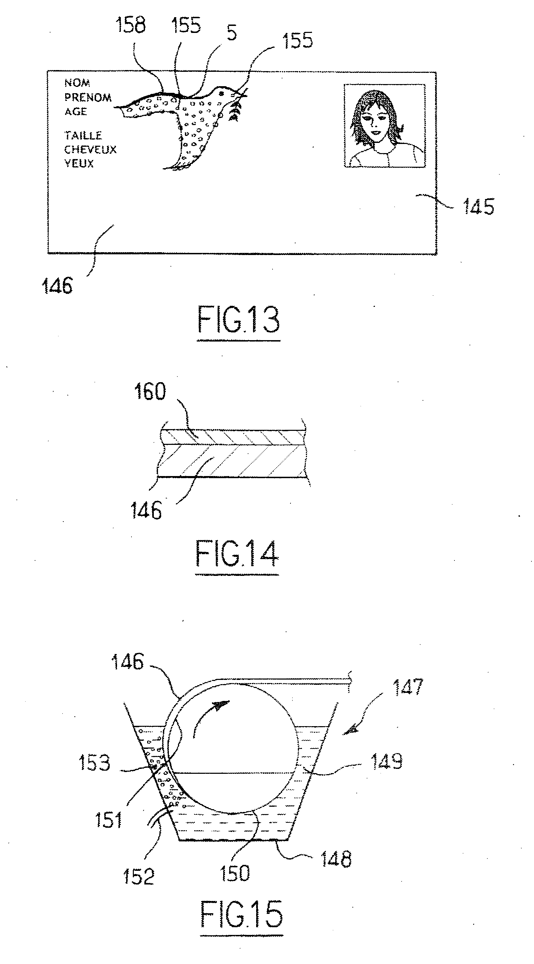

On a représenté sur la figure 13 un document 145 comportant un substrat 146, conforme à un autre exemple de mise en oeuvre de l'invention.

Le substrat 146 est une couche fibreuse formée à l'aide d'une machine à papier à forme ronde 147, comme illustré sur la figure 15.

Cette machine 147 comporte une cuve 148 contenant une suspension 149 de fibres, par exemple de fibres de cellulose et/ou des linters de coton et/ou des fibres synthétiques et/ou artificielles, dans laquelle est partiellement immergé un cylindre de toile rotatif 150 définissant une surface 151 au contact de laquelle se forme en continu la couche fibreuse 146.

Un conduit 152 est prévu pour générer une arrivée d'air au sein de la suspension de fibres 149 afin de former des bulles d'air 153.

Ces dernières créent au sein de la couche fibreuse 146 des hétérogénéités 155, comme illustré très schématiquement sur la figure 13.

Bien entendu, les hétérogénéités 155 peuvent être formées par tout autre moyen approprié, notamment en fonction du procédé de fabrication du substrat 146.

Dans l'exemple considéré, le substrat 146 est réalisé à base de fibres papetières.

Chaque hétérogénéité 155 correspond à une tache claire visible par transparence, en lumière transmise, ayant une densité massique inférieure à celle du reste du substrat 146.

Le nombre d'hétérogénéités 155 par unité de surface et/ou la taille moyenne des hétérogénéités peut être contrôlé en réglant par exemple le débit de la fuite d'air dans la suspension de fibres 149.

Du fait de leur distribution aléatoire au sein du substrat 146 ou dans plusieurs champs de celui-ci, les hétérogénéités 155, dans la zone d'inspection 5 définie par le filigrane 158, forment une signature unique associée au substrat 146.

Comme illustré à la figure 14, les hétérogénéités peuvent être générées dans une couche de surface 160 lors de l'enduction de la couche de surface sur le substrat 146 préalablement formé, les hétérogénéités correspondant à des fluctuations de la densité massique dans la couche 160. Ces fluctuations de la densité massique peuvent être provoquées par exemple par un dégazage de gaz emprisonné dans le substrat 146 lors du séchage, les gaz émis par le substrat pénétrant dans la couche de surface, ou, en variante, par l'injection volontaire de gaz dans la couche de surface 160 encore humide, avant ou lors de son enduction sur le substrat. Ces hétérogénéités dans la couche de surface 160 engendrent des fluctuations de densité optique.

### Exemples de documents conformes à l'invention

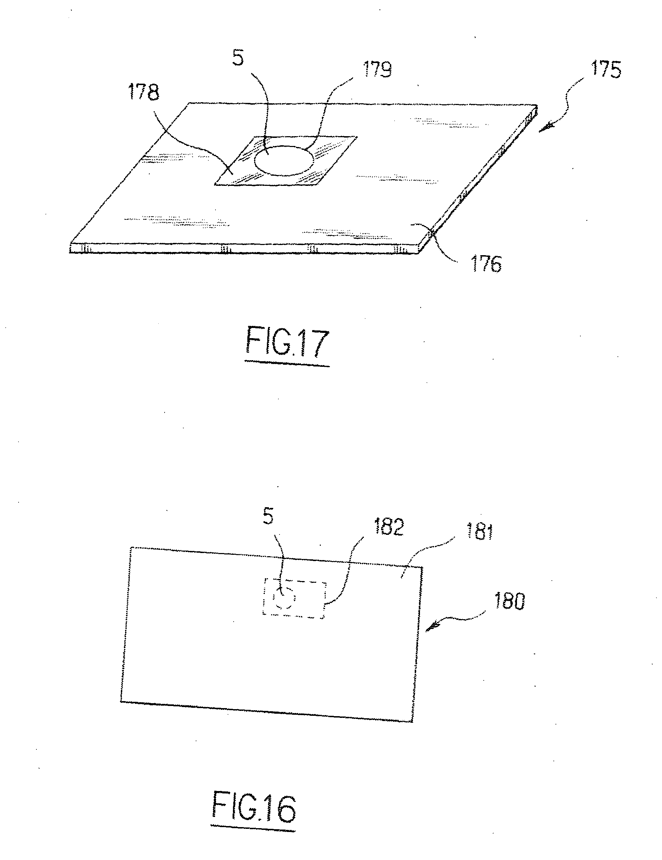

On a représenté sur la figure 16 un document 180 comportant un substrat 181 en matière fibreuse, sans ajout d'éléments d'identification distincts dans ou sur le substrat 181, présentant une structure d'authentification telle qu'un filigrane clair 182 du type rectangulaire, qui sert à la fois de structure d'authentification de premier niveau et de repère pour déterminer une zone d'inspection 5 (par contraste optique de la zone claire par rapport au reste du substrat). Lors de l'identification, la topographie 3D du substrat fibreux 181 sert à l'identification de par sa signature unique. Cette signature unique peut être lue par des détecteurs tels que ceux décrits par Escher Lab et Kodak, ou celui présenté par Russel Cowburn de l'Imperial College of London dans le document « Secure fingerprint of packaging and documents without tags, chips or ink ». Ce dernier détecteur repose sur un « scanner » qui examine les caractéristiques spécifiques d'absorption d'un rayonnement visible par le substrat dans une zone donnée.

Le détecteur optique peut être agencé pour repérer les contours d'un filigrane 182 et, à l'intérieur de la zone délimitée par le filigrane, déterminer une petite zone d'inspection 5 du substrat fibreux, la zone d'inspection 5 étant dans ce cas plus petite que la zone délimitée par le contour du filigrane.

On a représenté sur la figure 17 un document 175 comprenant un substrat en papier 176.

Un foil ou film 178 est apposé sur une face du substrat 176, ce foil ou film 178 ayant une fenêtre 179. Dans l'exemple considéré, le foil ou film 178 définit une structure d'authentification et la fenêtre 179 une zone d'inspection 5.

La zone d'inspection 5 est de préférence éloignée des coins et/ou bords du document qui sont susceptibles d'être pliés et/ou endommagés pendant la durée de vie du document.

L'identification du document 175 ou 180 est fondée sur l'analyse 3D de la surface du substrat en papier 176, dans la zone d'inspection 5.

L'analyse peut s'appuyer par exemple sur un balayage laser de la zone d'inspection 5 avec une résolution sub-micronique. La topographie 3D du papier dans la zone d'inspection 5 définit une signature unique du document.

Bien entendu, les caractéristiques des différents modes de réalisation décrits peuvent être combinées entre elles au sein des variantes non illustrées.

A titre d'exemple, le dispositif électronique 8 du document 1 décrit en référence à la figure 1 peut être remplacé par le code à barres 15 du document 10 de la figure 2.

Dans des exemples non illustrés, les articles illustrés sur les figures 1 à 6 notamment ne comportent pas l'information d'identification, celle-ci étant associée différemment à l'article.

L'expression « comportant un » doit être comprise comme étant synonyme de « comportant au moins un », sauf si le contraire est spécifié.

## Revendications

1. Article sécurisé, notamment un document de sécurité et/ou de valeur (1 ; 10 ; 20 ; 30 ; 40), comportant :
- au moins un substrat,
- au moins une structure d'authentification (4 ; 11 ; 22 ; 32 ; 42 ; 51) visible,
- au moins une zone d'inspection (5) définie au moins partiellement par la structure d'authentification, la structure d'authentification délimitant au moins partiellement le contour de la zone d'inspection et/ou servant à repérer la zone d'inspection,
- dans la zone d'inspection (5), au moins un élément d'identification (3 ; 50 ; 61) différent de la structure d'authentification, la zone d'inspection permettant avec au moins une caractéristique, notamment spatiale ou physique, dudit au moins un élément d'identification, de fournir une information d'identification.

2. Article selon la revendication 1, le substrat étant en matière fibreuse.

3. Article selon la revendication 1 ou 2, au moins une information d'identification étant associée à au moins une caractéristique, notamment spatiale et/ou physique, de la zone d'inspection (5).

4. Article selon la revendication 3, l'article comportant ladite information.

5. Article selon la revendication 3 ou 4, ladite information étant relative à une caractéristique spatiale et/ou physique dudit au moins un élément d'identification, notamment la distribution spatiale d'une pluralité d'éléments d'identification.

6. Article selon l'une quelconque des revendications précédentes, **caractérisé par le fait qu'**il comporte une pluralité d'éléments d'identification dispersés, notamment de manière aléatoire, au sein de la zone d'inspection et **par le fait que** l'information d'identification présente un lien avec une caractéristique, notamment spatiale et/ou physique, de ladite pluralité d'éléments d'identification.

7. Article selon l'une quelconque des revendications précédentes, **caractérisé par le fait que** la structure d'authentification (4 ; 11 ; 22 ; 32 ; 42) occupe un emplacement prédéterminé du document.

8. Article selon l'une quelconque des revendications 1 à 6, **caractérisé par le fait que** la structure d'authentification (51) occupe un emplacement aléatoire du document.

9. Article selon l'une quelconque des revendications précédentes, **caractérisé par le fait que** la structure d'authentification est détectable à l'oeil nu, en réflexion et/ou par transparence, en lumière visible.

10. Article selon l'une quelconque des revendications 1 à 8, **caractérisé par le fait que** la structure d'authentification est détectable à l'oeil nu par transparence, sous un éclairage prédéterminé, notamment ultraviolet, la structure d'authentification étant notamment indétectable en lumière visible.

11. Article selon l'une quelconque des revendications précédentes, **caractérisé par le fait que** les éléments d'identification sont indétectables à l'oeil nu.

12. Article selon l'une quelconque des revendications précédentes, **caractérisé par le fait que** les éléments d'identification (3) sont agencés pour émettre un signal spécifique lorsqu'ils sont soumis à une excitation extérieure, notamment optronique, électromagnétique, électrique, magnétique, thermique ou acoustique.

13. Article selon la revendication précédente, **caractérisé par le fait que** la caractéristique physique liée à l'information d'identification correspond à une caractéristique optique, électromagnétique, électrique, magnétique, thermique, ou acoustique, du ou des éléments d'identification dans la zone d'inspection.

14. Article selon l'une quelconque des revendications 1 à 13, **caractérisé par le fait que** la caractéristique spatiale liée à l'information d'identification est relative à la disposition, la taille ou la densité par unité de surface ou de volume du ou des éléments d'identification dans la zone d'inspection.

15. Article selon l'une quelconque des revendications précédentes, **caractérisé par le fait que** la structure d'authentification comporte un support (22) d'au moins un élément d'identification.

16. Article selon la revendication précédente, **caractérisé par le fait que** le support comporte au moins un élément en bande (22) ayant une largeur inférieure à celle de l'article, l'élément en bande étant notamment incorporé au moins partiellement dans un substrat (21) de l'article.

17. Article selon la revendication précédente, **caractérisé par le fait que** le substrat de l'article comporte au moins une fenêtre (23) par laquelle l'élément en bande (22) peut se trouver au moins partiellement exposé à l'extérieur, la zone d'inspection (5) étant alors notamment définie au moins partiellement par la fenêtre (23).

18. Article selon la revendication 15, **caractérisé par le fait que** le support de la structure d'authentification comporte au moins une fibre (51) ou une planchette (55) et **par le fait que** la zone d'inspection est définie au moins partiellement par le contour de la fibre ou la planchette.

19. Article selon la revendication précédente, **caractérisé par le fait que** la structure d'authentification comporte au moins une fibre, cette fibre portant une pluralité de particules formant un élément d'identification.

20. Article selon la revendication 19, **caractérisé par le fait que** la structure d'authentification comporte au moins une planchette réalisée à base de papier.

21. Article selon l'une quelconque des revendications précédentes, **caractérisé par le fait que** le document comporte au moins une première structure d'authentification d'un premier type et une pluralité de deuxièmes structures d'authentification d'un deuxième type, différent du premier.

22. Article selon la revendication 1, le contour de la zone d'inspection coïncidant avec celui de la structure d'authentification.

23. Article selon l'une quelconque des revendications 1 à 14, **caractérisé par le fait que** les éléments d'identification (3) sont dispersés au sein d'une zone de l'article ayant une superficie supérieure à celle de la structure d'authentification (4 ; 11), les éléments d'identification étant notamment dispersés sur toute la surface de l'article.

24. Article selon l'une quelconque des revendications précédentes, comportant un substrat, notamment en matière fibreuse, **caractérisé par le fait que** le substrat (2) incorpore ou porte au moins un élément d'identification (3).

25. Article selon l'une quelconque des revendications 1 à 14, **caractérisé par le fait que** les éléments d'identification sont dispersés, notamment en semis, au sein du substrat, dans une zone de superficie plus faible que la superficie du substrat, cette zone présentant par exemple une forme en bande.

26. Article selon l'une quelconque des revendications précédentes, **caractérisé par le fait que** la structure d'authentification et le substrat sont distincts.

27. Article selon la revendication précédente, **caractérisé par le fait que** la structure d'authentification est déposée sur une face du substrat, la structure d'authentification (11) comportant notamment une bande ou un patch.

28. Article selon l'une des revendications 26 et 27, **caractérisé par le fait que** la structure d'authentification, notamment la bande ou le patch, comporte au moins une fenêtre (13) définissant au moins partiellement la zone d'inspection, la fenêtre étant notamment formée par une zone démétallisée ou une zone perforée de la structure d'authentification.

29. Article selon la revendication 26, **caractérisé par le fait que** la structure d'authentification comporte un revêtement, notamment un couchage (42) tel qu'un couchage iridescent déposé, sur le substrat, le revêtement présentant des zones d'épaisseur variable agencées pour définir la zone d'inspection.

30. Article selon la revendication 26, comportant un papier bi-jet, **caractérisé par le fait qu'**un premier jet (33) définit le substrat, la structure d'authentification comportant au moins une fenêtre réalisée dans un deuxième jet (32) et délimitant au moins partiellement la zone d'inspection.

31. Article selon l'une quelconque des revendications 1 à 25, **caractérisé par le fait que** la structure d'authentification est réalisée au moins partiellement sur ledit substrat.

32. Article selon la revendication précédente, **caractérisé par le fait que** la structure d'authentification comporte au moins un filigrane (4) réalisé sur le substrat.

33. Article selon l'une quelconque des revendications précédentes, **caractérisé par le fait que** l'un au moins des éléments d'identification est choisi parmi :
- une matière active, telle que par exemple une substance chimique absorbant dans l'UV ou des éléments détectables par fluorescence X,
- une particule, notamment luminescente, en particulier fluorescente,
- une fibre telle qu'une fibre magnétique, notamment à magnétisme doux, ou une fibre excitable optiquement, notamment par exposition à un rayonnement infrarouge,
- la microstructure 3D d'un substrat en papier.

34. Article selon l'une quelconque des revendications précédentes, comportant un substrat (60) réalisé en matière plastique, **caractérisé par le fait que** les éléments d'identification sont formés par des hétérogénéités (61) dans le substrat, étant notamment des manques de matière ou des bulles de gaz.

35. Article selon l'une quelconque des revendications précédentes, **caractérisé par le fait que** la structure d'authentification comporte au moins l'un des éléments suivants :
- un filigrane,
- une fibre apparaissant par exemple colorée en lumière du jour ou seulement sous illumination spécifique, la fibre pouvant avoir une forme cylindrique ou non, avec une section non circulaire par exemple,
- une planchette apparaissant à la lumière du jour ou seulement sous illumination spécifique, la planchette pouvant être par exemple métallisée ou holographique sur toute sa surface ou sur une portion seulement de sa surface, la planchette pouvant avoir une forme circulaire ou non,
- un film ou une bande imprimée, métallisé ou holographique,
- un foil imprimé, métallisé ou holographique,
- une impression à effet optique variable.

36. Article selon l'une quelconque des revendications 1 à 34, **caractérisé par le fait que** la structure d'authentification est différente d'une impression, notamment d'une encre visible en lumière blanche.

37. Article selon l'une quelconque des revendications précédentes, **caractérisé par le fait que** l'information d'identification comporte la caractéristique spatiale et/ou physique.

38. Article selon l'une quelconque des revendications 1 à 36, **caractérisé par le fait que** l'information d'identification permet de récupérer la caractéristique spatiale et/ou physique stockée sur un support (130) distinct de l'article.

39. Article selon l'une quelconque des revendications précédentes, **caractérisé par le fait que** l'information d'identification contient ou sert à récupérer une image des éléments d'identification contenus dans la zone d'inspection.

40. Article selon l'une quelconque des revendications précédentes, **caractérisé par le fait que** l'information d'identification est non directement appréhendable, étant notamment cryptée.

41. Article selon l'une quelconque des revendications précédentes, **caractérisé par le fait qu'**il comporte au moins un support d'information (8) capable de mémoriser l'information d'identification.

42. Article selon la revendication précédente, **caractérisé par le fait que** le support d'information est choisi parmi :
- un dispositif optique, notamment un code à barres,
- un dispositif électronique capable de mémoriser des informations, comprenant notamment une puce électronique,
- une piste magnétique (28),
- une mémoire optique.

43. Article selon l'une quelconque des revendications précédentes, **caractérisé en ce qu'**il comporte au moins une mention apparente (6).

44. Article selon la revendication précédente, **caractérisé en ce que** l'information d'identification permet d'accéder à une information représentative d'au moins une mention apparente figurant sur l'article.

45. Article selon l'une quelconque des revendications précédentes, **caractérisé par le fait qu'**il comporte au moins un substrat en papier.

46. Article selon l'une quelconque des revendications précédentes, étant dépourvu de marque imprimée avec une encore non optiquement variable et délimitant au moins partiellement la zone d'inspection ou permettant de repérer celle-ci.

47. Procédé d'authentification et d'identification d'un article sécurisé, notamment un document de sécurité et/ou de valeur, l'article comportant :
- au moins une structure d'authentification,
- au moins une zone d'inspection définie au moins partiellement par la structure d'authentification,
- dans la zone d'inspection, au moins un élément d'identification différent de la structure d'authentification,
à l'article étant associée au moins une information d'identification ayant un lien avec au moins une caractéristique, notamment spatiale et/ou physique, de la zone d'inspection,
le procédé comportant une authentification et une identification de l'article,
le procédé étant **caractérisé par le fait que** l'authentification de l'article comporte les étapes suivantes :
- observer la structure d'authentification (4 ; 11 ; 22 ; 32 ; 42 ; 51), notamment à l'oeil nu, en réflexion et/ou par transparence, dans une condition d'éclairage donnée,
- conclure, grâce à l'observation, quant à l'authenticité de l'article, et **par le fait que** l'identification de l'article comporte les étapes suivantes :
- comparer la caractéristique de la zone d'inspection de l'article ayant un lien avec l'information d'identification, avec au moins une caractéristique obtenue à partir de la zone d'inspection de l'article,
- conclure, au moins grâce à la comparaison, quant à l'identité de l'article.

48. Procédé selon la revendication précédente, **caractérisé par le fait que** l'identification de l'article est réalisée de manière automatisée.

49. Procédé selon l'une des revendications 47 et 48, **caractérisé par le fait qu'**il comporte l'étape suivante :
- repérer la zone d'inspection par analyse d'image de l'article.

50. Procédé selon l'une quelconque des revendications 47 à 49, l'article comportant l'information d'identification et celle-ci étant lue lors de l'identification de l'article avant de comparer la caractéristique de la zone d'inspection avec l'information d'identification, l'identification de l'article comportant l'étape suivante :
- comparer la disposition des éléments d'identification dans la zone d'inspection de l'article avec une image récupérée grâce à l'information d'identification.

51. Procédé selon l'une quelconque des revendications 47 à 50, **caractérisé par le fait que** l'identification de l'article comporte les étapes suivantes :
- mesurer l'intensité d'un signal et/ou déterminer le type de signal généré par les éléments d'identification dans la zone d'inspection, notamment lorsque les éléments d'identification sont soumis à une excitation extérieure,
- comparer l'intensité du signal mesurée et/ou le type de signal avec une donnée récupérée grâce à l'information d'identification.

52. Procédé selon l'une quelconque des revendications 47 à 51, l'article comportant au moins une mention apparente, le procédé comportant les étapes suivantes :
- comparer une information représentative de la mention apparente avec la mention apparente elle-même figurant sur l'article,
- conclure sur l'authenticité et/ou l'identité de l'article au moins grâce à la comparaison.

53. Système d'authentification et/ou d'identification (100) d'un article sécurisé, notamment un document de sécurité et/ou de valeur, l'article comportant :
- au moins une structure d'authentification,
- au moins une zone d'inspection définie au moins partiellement par la structure d'authentification,
dans la zone d'inspection, au moins un élément d'identification différent de la structure d'authentification, à l'article étant associée au moins une information d'identification ayant un lien avec au moins une caractéristique, notamment spatiale et/ou physique, de la zone d'inspection, et notamment dudit au moins un élément d'identification,
le système comportant :
- des moyens d'analyse d'image (103), notamment optiques, agencés pour repérer la zone d'inspection sur l'article,
- des moyens d'acquisition (104) d'une caractéristique, notamment spatiale et/ou physique, de la zone d'inspection, et notamment du ou des éléments d'identification dans la zone d'inspection repérée par les moyens d'analyse d'image,
- optionnellement, une unité de traitement (105) agencée pour comparer la caractéristique de la zone d'inspection de l'article ayant un lien avec l'information d'identification, avec au moins une caractéristique obtenue grâce aux moyens d'acquisition.

54. Matériau en feuille comportant :
- au moins une première structure d'authentification d'un premier type,
- au moins une première zone d'inspection définie au moins partiellement par la première structure d'authentification,
- au moins une pluralité de deuxièmes structures d'authentification d'un deuxième type, différent du premier, chaque deuxième structure d'authentification comportant par exemple une fibre ou une planchette, les deuxièmes structures d'authentification étant de préférence dispersées de manière aléatoire au sein de la première zone d'inspection,
- au moins une deuxième zone d'inspection définie au moins partiellement par l'une au moins des deuxièmes structures d'authentification, étant par exemple définie par le contour d'une deuxième structure d'authentification,
- dans la deuxième zone d'inspection, au moins un élément d'identification différent de la deuxième structure d'authentification.

55. Procédé de fabrication d'un document de sécurité et/ou de valeur à partir d'un matériau en feuille, le matériau en feuille comportant :
- au moins un substrat,
- au moins une structure d'authentification,
- au moins une zone d'inspection définie au moins partiellement par la structure d'authentification,
- dans la zone d'inspection, au moins un élément d'identification, différent de la structure d'authentification,
le procédé comportant l'étape suivante :
- munir le matériau en feuille d'au moins une information d'identification ayant un lien avec au moins une caractéristique, notamment spatiale et/ou physique, de la zone d'inspection, et notamment dudit au moins un élément d'identification de la zone d'inspection.

56. Matériau en feuille comportant ;
- au moins un substrat,
- au moins une structure d'authentification solidaire du substrat et visible, notamment une fibre ou une planchette ou un groupe de fibres et/ou planchettes,
- au moins une zone d'inspection définie au moins partiellement par la structure d'authentification, notamment par le contour de la fibre ou de la planchette,
- dans la zone d'inspection, au moins un élément d'identification, différent de la structure d'authentification, l'élément d'identification comportant des particules ou une matière active.

## Claims

1. Secure article, notably a security and/or valuable document (1; 10; 20; 30; 40), comprising:
- at least one substrate,
- at least one visible authenticating structure (4; 11; 22; 32; 42; 51),
- at least one inspection zone (5) defined at least partly by the authenticating structure, the authenticating structure delimiting at least partly the outline of the inspection zone and/or serving to locate the inspection zone,
- in the inspection zone (5), at least one identifying element (3; 50; 61) different from the authenticating structure, the inspection zone enabling an identification information to be supplied with at least one feature, notably spatial or physical, of said at least identifying element.

2. Article according to claim 1, the substrate being fibrous.

3. Article according to claim 1 or 2, at least an identification information being associated with at least one feature, notably spatial and/or physical, of the inspection zone (5).

4. Article according to claim 3, the article comprising said information.

5. Article according to claim 3 or 4, said information being relative to one spatial and/or physical feature of said at least identifying element, notably the spatial distribution of a plurality of identifying elements.

6. Article according to any of the previous claims, **characterised in that** it comprises one plurality of scattered identifying elements, notably randomly, within the inspection zone and **in that** the identification information presents one link to one feature, notably spatial and/or physical, of said plurality of identifying elements.

7. Article according to any of the previous claims, **characterised in that** the authenticating structure (4; 11; 22; 32; 42) holds a predetermined location in the document.

8. Article according to any of claims 1 to 6, **characterised in that** the authenticating structure (51) holds a random location in the document.

9. Article according to any of the previous claims, **characterised in that** the authenticating structure can be detected with the naked eye, by reflection and/or transparency, in visible light.

10. Article according to any of claims 1 to 8, **characterised in that** the authenticating structure can be detected with the naked eye by transparency, under a predetermined lighting, notably ultraviolet, the authenticating structure being notably undetectable in visible light.

11. Article according to any of the previous claims, **characterised in that** the identifying elements are undetectable by the naked eye.

12. Article according to any of the previous claims, **characterised in that** the identifying elements (3) are arranged for emitting one specific signal when submitted to one external excitation, notably, optoelectronic, electromagnetic, electric, magnetic, thermal or acoustic.

13. Article according to the previous claim, **characterised in that** the physical feature linked to the identification information corresponds to one optical, electromagnetic, electric, magnetic, thermal or acoustic feature, of said identifying element(s) in the inspection zone.

14. Article according to any of claims 1 to 13, **characterised in that** the spatial feature linked to the identification information is relative to arrangement, size or the density per unit area or volume unit of the identifying element(s) in the inspection zone.

15. Article according to any of the previous claims, **characterised in that** the authenticating structure comprises one medium (22) of at least one identifying element.

16. Article according to the previous claim, **characterised in that** the medium includes at least one strip element (22) with a width lower than the one of article, the strip element being notably incorporated at least partly into one substrate (21) of the article.

17. Article according to the previous claim, **characterised in that** the article comprises at least one window (23) through which the strip element (22) can be at least partly exposed to outside, the inspection zone (5) being then especially defined at least partly by the window (23).

18. Article according to claim 15, **characterised in that** the authenticating structure medium comprises at least one fibre (51) or one flake (55) and **in that** the inspection zone is defined at least partly by the outline of the fibre or the flake.

19. Article according to the previous claim, **characterised in that** the authenticating structure comprises at least one fibre, this fibre carrying a plurality of particles forming one identifying element.

20. Article according to claim 19, **characterised in that** the authenticating structure includes at least one paper-based flake.

21. Article according to any of the previous claims, **characterised in that** the document comprises at least one first authenticating structure of a first type and one plurality of second authenticating structures of a second type, different from the first one.

22. Article according to claim 1, the outline of the inspection zone coinciding with the one of the authenticating structure.

23. Article according to any of claims 1 to 14, **characterised in that** the identifying elements (3) are scattered within one article zone having an area higher than the one of the authenticating structure (4; 11), the identifying elements being notably scattered all over the article surface.

24. Article according to any of the previous claims, comprising one substrate, notably fibrous, **characterised in that** the substrate (2) incorporates or carries at least one identifying element (3).

25. Article according to any of claims 1 to 14, **characterised in that** the identifying elements are scattered, notably at random, within the substrate, in an area zone lower than the substrate area, this zone presenting for example a strip shape.

26. Article according to any of the previous claims **characterised in that** the authenticating structure and the substrate are distinct.

27. Article according to the previous claim, **characterised in that** the authenticating structure is laid down on one substrate face, the authenticating structure (11) comprising notably one strip or one patch.

28. Article according to any of claims 26 and 27, **characterised in that** the authenticating structure, notably the strip or the patch, comprises at least one window (13) delimiting at least partly the inspection zone, the window being notably formed by one demetallized zone or one punched zone of the authenticating structure.

29. Article according to claim 26, **characterised in that** the authenticating structure comprises one coating, notably one surface application (42) such as an iridescent coating laid down onto the substrate, the coating presenting some zones of variable thickness arranged for delimiting the inspection zone.

30. Article according to claim 26, comprising one bi-jet paper, **characterised in that** one first jet (33) delimits the substrate, the authenticating structure comprising at least one window achieved in one second jet (32) and delimiting at least partly the inspection zone.

31. Article according to any of claims 1 to 25, **characterised in that** the authenticating structure is carried out at least partly on said substrate.

32. Article according to the previous claim, **characterised in that** the authenticating structure comprises at least one watermark (4) carried out onto the substrate.

33. Article according to any of the previous claims, **characterised in that** at least one of identifying elements is chosen among:
- one active material, such as for instance one ultraviolet absorber chemical compound or some elements that can be detected by x-ray fluorescence,
- one particle, notably luminescent, especially fluorescent,
- one fibre such as one magnetic fibre, notably a soft magnetic one, or one fibre that can be optically excited, notably by exposure to infrared,
- the 3D microstructure of one paper substrate.

34. Article according to any of the previous claims, comprising one plastic substrate (60), **characterised in that** the identifying elements are formed by heterogeneous elements (61) in the substrate, being notably lacks of material or gas bubbles.

35. Article according to any of the previous claims, **characterised in that** the authenticating structure comprises at least one of the following elements:
- one watermark,
- one fibre appearing for example coloured in daylight or only under a specific illumination, the fibre can have a cylindrical shape or not, with a non circular section for instance,
- one flake appearing in daylight or only under a specific illumination, the flake can be for instance metallic or holographic on its whole surface or on only one portion of its surface, the flake can have a circular shape or not,
- one film or one printed strip, metallic or holographic,
- one printed, metallic or holographic foil,
- one print with variable optical effect.

36. Article according to any of claims 1 to 34, **characterised in that** the authenticating structure is different from one print, notably of a visible ink in white light.

37. Article according to any of the previous claims, **characterised in that** the identification information comprises the spatial and/or physical feature.

38. Article according to any of claims 1 to 36, **characterised in that** the identification information enables to retrieve the spatial and/or physical feature stored on one distinct medium (130) of the article.

39. Article according to any of the previous claims, **characterised in that** the identification information contains or serves to retrieve one image of identifying elements contained in the inspection zone.

40. Article according to any of the previous claims, **characterised in that** the identification information cannot be directly comprehended, being notably encrypted.

41. Article according to any of the previous claims, **characterised in that** it comprises at least one data medium (8) able to store the identification information.

42. Article according to the previous claim, **characterised in that** the data medium is chosen among:
- one optical device, notably one bar code,
- one electronic device able to store data comprising notably one chip,
- one magnetic track (28),
- one optical memory.

43. Article according to any of the previous claims, **characterised in that** it comprises at least one apparent quotation (6).

44. Article according to the previous claim, **characterised in that** the identification information enables to have access to a piece of information representing at least an apparent quotation located on the article.

45. Article according to any of the previous claims, **characterised in that** it comprises at least one paper substrate.

46. Article according to any of the previous claims, being short of printed mark with a non optical variable ink and delimiting at least partly the inspection zone or enabling to locate the latter.

47. Method for authenticating and identifying a secure article, notably a security and/or valuable document, the article comprising:
- at least one authenticating structure,
- at least one inspection zone defined at least partly by the authenticating structure,
- in the inspection zone, at least one identifying element different from the authenticating structure,
the article being associated with at least one piece of identification information linked to at least one feature, notably spatial and/or physical, of the inspection zone,
the method comprising one authentication and one identification of the article,
the method being **characterised in that** the authentication of the article comprises the following steps of:
- observing the authenticating structure (4; 11; 22; 32; 42; 51), notably with the naked eye, by reflection and/or transparency, under a given lighting condition,
- concluding, thanks to observation, concerning the article authenticity,
and **in that** the article identification comprises the following steps of:
- comparing the feature of the article inspection zone being linked to the identification information, with at least one feature obtained from the article inspection zone,
- concluding, at least thanks to comparison, concerning the article identity.

48. Method according to the previous claim, **characterised in that** the article identification is automatically carried out.

49. Method according to any of claims 47 and 48, **characterised in that** it comprises the following step of:
- locating the inspection zone through the image analysis of the article.

50. Method according to any of claims 47 to 49, the article comprising the identification information and this one being read when identifying the article before comparing the feature of the inspection zone with the identification information, the article identification comprising the following step of:
- comparing the arrangement of identifying elements in the article inspection zone with an image retrieved thanks to the identification information.

51. Method according to any of claims 47 to 50, **characterised in that** the article identification comprises the following steps of:
- measuring the signal intensity and/or determining the type of signal generated by the identifying elements in the inspection zone, notably when the identifying elements are submitted to an external excitation,
- comparing the measured signal intensity and/or the type of signal with a piece of data retrieved thanks to the identification information.

52. Method according to any of claims 47 to 51, the article comprising at least one apparent quotation, the method comprising the following steps of:
- comparing an information representing the apparent quotation with the apparent quotation itself appearing on the article,
- concluding with the authenticity and/or identify of the article at least thanks to the comparison.

53. System for authenticating and/or identifying (100) a secure article, notably a security and/or valuable document, the article comprising:
- at least one authenticating structure,
- at least one inspection zone defined at least partly by the authenticating structure,
in the inspection zone, at least one identifying element different from the authenticating structure, the article being associated with at least an identification information linked to at least one feature, notably spatial and/or physical, of the inspection zone, and notably of said at least identifying element,
the system comprising:
- image analysis means (103), notably optical, arranged for locating the inspection zone on the article,
- acquisition means (104) of a feature, notably spatial and/or physical, of the inspection zone, and notably of identifying element(s) in the inspection zone located by the image analysis means,
- optionally, one processing unit (105) arranged for comparing the feature of the article inspection zone linked to the identification information, with at least one feature obtained thanks to acquisition means.

54. Sheet material comprising:
- at least one first authenticating structure of a first type,
- at least one first inspection zone defined at least partly by the first authenticating structure,
- at least one plurality of second authenticating structures of a second type, different from the first one, each second authenticating structure including for example one fibre or one flake, the second authenticating structures being preferably scattered at random within the first inspection zone,
- at least one second inspection zone defined at least partly by at least one of the second authenticating structures, being for example defined by the outline of a second authenticating structure,
- in the second inspection zone, at least one identifying element different from the second authenticating structure.

55. Method for manufacturing a secure and/or valuable document from a sheet material, the sheet material comprising:
- at least one substrate,
- at least one authenticating structure,
- at least one inspection zone defined at least partly by the authenticating structure,
- in the inspection zone, at least one identifying element, different from the authenticating structure,
the method comprising the following step of:
- providing the sheet material with at least one identification information linked to at least one feature, notably spatial and/or physical, of the inspection zone, and notably of said at least identifying element of the inspection zone.

56. Sheet material comprising:
- at least one substrate,
- at least one visible authenticating structure interacting with the substrate, notably one fibre or one flake or a group of fibres and/or flakes,
- at least one inspection zone defined at least partly by the authenticating structure, notably by the outline of the fibre or the flake,
- in the inspection zone, at least one identifying element, different from the authenticating structure, the identifying element comprising particles or one active material.

## Patentansprüche

1. Sicherer Gegenstand, insbesondere Sicherheits- und/oder Wertschrift (1; 10; 20; 30; 40), der aufweist:
- mindestens ein Substrat,
- mindestens eine Struktur zur Authentisierung (4; 11; 22; 32; 42; 51), die sichtbar ist,
- mindestens einen Prüfbereich (5), der zumindest teilweise durch die Struktur zur Authentisierung bestimmt ist, wobei die Struktur zur Authentisierung den Umriss des Prüfbereiches zumindest teilweise begrenzt und/oder dazu dient, den Prüfbereich einzugrenzen,
- mindestens ein Element zur Identifikation (3; 50; 61) in dem Prüfbereich (5) das sich von der Struktur zur Authentisierung unterscheidet, wobei der Prüfbereich es mit mindestens einem Charakteristikum, insbesondere einem räumlichen oder physikalischen, des mindestens einen Elements zur Identifikation ermöglicht, eine Information zur Identifikation zu ergeben.

2. Gegenstand nach Anspruch 1, wobei das Substrat aus einem faserartigen Material ist.

3. Gegenstand nach Anspruch 1 oder 2, wobei mindestens eine Identifikationsinformation mit zumindest einem Charakteristikum, insbesondere einem räumlichen und/oder einem physikalischen, des Prüfbereiches (5) verknüpft ist.

4. Gegenstand nach Anspruch 3, wobei der Gegenstand die Information aufweist.

5. Gegenstand nach Anspruch 3 oder 4, wobei die Information in Bezug zu einem räumlichen und/oder physikalischen Charakteristikum des mindestens einem Identifikationselementes, insbesondere einer räumlichen Verteilung mehrerer Identifikationselemente, steht.

6. Gegenstand nach irgendeinem der voranstehenden Ansprüche, **dadurch gekennzeichnet, dass** dieser mehrere verstreute Identifikationselemente, insbesondere in einer zufälligen Art, innerhalb des Prüfbereiches aufweist, und **dadurch**, dass die Identifikationsinformation ein Band bzw. Streifen mit einem Charakteristikum, insbesondere einem räumlichen und/oder physikalischen, der mehreren Identifikationselemente darstellt.

7. Gegenstand nach einem der voranstehenden Ansprüche, **dadurch gekennzeichnet, dass** die Struktur zur Authentisierung (4; 11; 22; 32; 42) eine vorbestimmte Stelle der Schrift bzw. des Dokumentes besetzt.

8. Gegenstand nach einem der Ansprüche 1 bis 6, **dadurch gekennzeichnet, dass** die Struktur zur Authentisierung (51) eine zufällige Stelle des Dokumentes bzw. der Schrift besetzt.

9. Gegenstand nach einem der voranstehenden Ansprüche, **dadurch gekennzeichnet, dass** die Struktur zur Authentisierung mit dem nackten Auge mittels Reflektion und/oder durch Transparenz im sichtbaren Licht erkennbar ist.

10. Gegenstand nach einem der Ansprüche 1 bis 8, **dadurch gekennzeichnet, dass** die Struktur zur Authentisierung mit dem nackten Auge mittels Transparenz unter einer vorbestimmten Beleuchtung, insbesondere Ultraviolett, erfassbar ist, wobei die Struktur zur Authentifizierung insbesondere im sichtbaren Licht erfassbar ist.

11. Gegenstand nach einem der voranstehenden Ansprüche, **dadurch gekennzeichnet, dass** die Identifikationselemente nicht mit dem nackten Auge erfassbar sind.

12. Gegenstand nach einem der voranstehenden Ansprüche, **dadurch gekennzeichnet, dass** die Identifikationselemente (3) angeordnet sind, um ein bestimmtes Signal zu emittieren, wenn sie einer äußeren Anregung, insbesondere einer optronischen, elektromagnetischen, elektrischen, magnetischen, thermischen oder akustischen, ausgesetzt werden.

13. Gegenstand nach dem voranstehenden Anspruch, **dadurch gekennzeichnet, dass** das physikalische Charakteristikum, das in der Identifikationsinformation enthalten ist, einer optischen, elektromagnetischen, elektrischen, magnetischen, thermischen oder akustischen Charakteristik des oder der Identifikationselemente in dem Prüfbereich entspricht.

14. Gegenstand nach einem der Ansprüche 1 bis 13, **dadurch gekennzeichnet, dass** die räumliche Charakteristik, die in der Identifikationsinformation ist, im Verhältnis zu der Anordnung, der Größe oder der Dichte pro Oberflächeneinheit oder Volumen des oder der Identifikationselemente in dem Prüfbereich ist.

15. Gegenstand nach einem der voranstehenden Ansprüche, **dadurch gekennzeichnet, dass** die Struktur zur Authentisierung einen Trägerbereich (22) von zumindest einem Identifikationselement aufweist.

16. Gegenstand nach dem voranstehenden Anspruch, **dadurch gekennzeichnet, dass** der Träger zumindest ein Element (22) im Streifen aufweist, das eine Größe hat, die geringer als die des Gegenstandes ist, wobei das Streifenelement insbesondere zumindest teilweise in dem Substrat (21) des Gegenstandes eingebettet ist.

17. Gegenstand nach dem voranstehenden Anspruch, **dadurch gekennzeichnet, dass** das Substrat des Gegenstandes zumindest ein Fenster (23) aufweist, durch welches sich das Streifenelement (22) zumindest teilweise nach außen ausgesetzt befindet, wobei der Prüfbereich (5) bereits insbesondere teilweise durch das Fenster (23) definiert ist.

18. Gegenstand nach Anspruch 15, **dadurch gekennzeichnet, dass** der Tragbereich bzw. der Träger der Struktur zur Authentisierung zumindest eine Faser (150) oder ein Plättchen bzw. Fleckchen aufweist, und **dadurch**, dass der Prüfbereich zumindest teilweise durch den Umriss der Faser oder des Plättchens bzw. Fleckchens bestimmt wird.

19. Gegenstand nach dem voranstehenden Anspruch, **dadurch gekennzeichnet, dass** die Struktur zur Authentisierung mindestens eine Faser aufweist, wobei diese Faser mehrere Teilchen aufweist, die ein Identifikationselement ausbilden.

20. Gegenstand nach Anspruch 19, **dadurch gekennzeichnet, dass** die Struktur zur Authentisierung zumindest ein Plättchen bzw. Fleckchen aufweist, das auf der Grundlage von Papier verwirklicht ist.

21. Gegenstand nach einem der voranstehenden Ansprüche, **dadurch gekennzeichnet, dass** das Dokument bzw. die Schrift zumindest eine erste Struktur zur Authentisierung einer ersten Art, und mehrere zweite Strukturen zur Authentisierung einer zweiten Art, die sich von der ersten Art unterscheidet, aufweist.

22. Gegenstand nach Anspruch 1, wobei der Umriss des Prüfbereiches mit dem der Struktur zur Authentisierung zusammenfällt.

23. Gegenstand nach einem der Ansprüche 1 bis 14, **dadurch gekennzeichnet, dass** die Identifikationselemente (3) innerhalb des Bereichs des Gegenstandes verstreut sind, der eine größere Oberfläche als die Struktur zur Authentisierung (4; 11) hat, wobei die Identifikationselemente insbesondere auf der ganzen Fläche des Gegenstandes verteilt sind.

24. Gegenstand nach einem der voranstehenden Ansprüche, der ein Substrat, insbesondere aus einem faserartigen Material aufweist, **dadurch gekennzeichnet, dass** das Substrat (2) mindestens ein Identifikationselement (3) aufnimmt oder trägt.

25. Gegenstand nach einem der Ansprüche 1 bis 14, **dadurch gekennzeichnet, dass** die Identifikationselemente insbesondere zur Hälfte in dem Mittenbereich der Oberfläche, der unbedeutender als die Oberfläche des Substrats ist, verteilt sind, wobei dieser Bereich beispielsweise die Form eines Bandes bzw. Streifens darstellt.

26. Gegenstand nach irgendeinem der voranstehenden Ansprüche, **dadurch gekennzeichnet, dass** die Struktur zur Authentisierung und das Substrat unterschiedlich sind.

27. Gegenstand nach dem voranstehenden Anspruch, **dadurch gekennzeichnet, dass** die Struktur zur Authentisierung auf einer Fläche des Substrates angeordnet ist, wobei die Struktur zur Authentisierung (11) ein Band bzw. einen Streifen oder Flecken bzw. Patch aufweist.

28. Gegenstand nach einem der Ansprüche 26 und 27, **dadurch gekennzeichnet, dass** die Struktur zur Authentisierung, insbesondere das Band bzw. der Streifen oder der Flecken bzw. Patch zumindest ein Fenster (13) aufweist, das zumindest teilweise den Prüfbereich definiert, wobei das Fenster insbesondere durch einen entmetallisierten Bereich oder einen gelochten Bereich der Struktur zur Authentisierung gebildet ist.

29. Gegenstand nach Anspruch 26, **dadurch gekennzeichnet, dass** die Struktur zur Authentisierung einen Überzug bzw. eine Verkleidung, insbesondere eine Beschichtung (42), wie einer irisierenden Beschichtung, aufweist, die auf dem Substrat vorgesehen ist, wobei der Überzeug bzw. die Verkleidung einen Bereich variabler Stärke darstellt, der angeordnet ist, um den Prüfbereich festzulegen.

30. Gegenstand nach Anspruch 26, der eine erste Faserstoffbahn (33) das Substrat festlegt, wobei die Struktur zur Authentisierung zumindest ein Fenster aufweist, das in einer zweiten Faserstoffbahn (32) bzw. -streifen verwirklicht ist und den Prüfbereich zumindest teilweise begrenzt.

31. Gegenstand nach einem der Ansprüche 1 bis 25, **dadurch gekennzeichnet, dass** die Struktur zur Authentisierung zumindest teilweise auf dem Substrat verwirklicht ist.

32. Gegenstand nach dem voranstehenden Anspruch, **dadurch gekennzeichnet, dass** die Struktur zur Authentisierung zumindest ein Wasserzeichen (4) aufweist, das auf dem Substrat verwirklicht ist.

33. Gegenstand nach einem der voranstehenden Ansprüche, **dadurch gekennzeichnet, dass** zumindest eines der Identifikationselemente ausgewählt ist unter:
- einem aktiven Material, wie z.B. einer chemischen Substanz, die im UV-Bereich absorbiert, oder Bestandteilen, die durch Röntgenfluoreszenz erfassbar sind,
- ein Teilchen, insbesondere ein lumineszentes und bevorzugt ein fluoreszentes,
- eine Faser, wie etwa eine magnetische Faser, insbesondere eine weichmagnetische, oder eine optisch, insbesondere durch Bestrahlung mit einer Infrarotstrahlung anregbare Faser,
- eine dreidimensionale Mikrostruktur eines papierenen Substrats.

34. Gegenstand nach einem der voranstehenden Ansprüche, der ein Substrat (60) aufweist, das mit Plastikmaterial bzw. Kunststoffmaterial verwirklicht ist, **dadurch gekennzeichnet, dass** die Identifikationselemente durch Andersartigkeiten (61) in dem Substrat ausgebildet sind, die insbesondere Ausnehmungen des Materials oder Gasblasen sind.

35. Gegenstand nach irgendeinem der voranstehenden Ansprüche, **dadurch gekennzeichnet, dass** die Struktur zur Authentisierung zumindest eines der nachfolgenden Elemente aufweist:
- ein Wasserzeichen,
- eine Faser, die z.B. im Tageslicht oder unter einer bestimmten Beleuchtung farbig erscheint, wobei die Faser eine zylindrische Form haben kann oder nicht, z.B. mit einem kreisförmigen Querschnitt,
- ein im Tageslicht oder nur unter einer bestimmten Beleuchtung erscheinendes Fleckchen, wobei das Fleckchen z.B. metallisiert oder holografisch auf seiner gesamten Oberfläche oder nur einem Abschnitt seiner Oberfläche sein kann, wobei das Fleckchen eine Kreisform haben kann oder nicht,
- ein Film oder ein Band bzw. Streifen, der ein- bzw. aufgedruckt, metallisiert oder holografisch ist,
- eine ein- bzw. aufgedruckte, metallisierte oder holographische Folie,
- eine Prägung mit optisch variablem Effekt.

36. Gegenstand nach einem der Ansprüche 1 bis 34, **dadurch gekennzeichnet, dass** die Struktur zur Authentisierung von einem Druck insbesondere einer Tinte bzw. Druckfarbe verschieden ist, die bei weißem Licht sichtbar ist.

37. Gegenstand nach irgendeinem der voranstehenden Ansprüche, **dadurch gekennzeichnet, dass** die Identifikationsinformation das räumliche und/oder physikalische Charakteristikum aufweist.

38. Gegenstand nach einem der Ansprüche 1 bis 36, **dadurch gekennzeichnet, dass** es die Identifikationsinformation ermöglicht, das räumliche und/oder physikalische Charakteristikum zurückzugewinnen, das auf einem Träger (130), der sich von dem Gegenstand unterscheidet, gespeichert ist.

39. Gegenstand nach einem der voranstehenden Ansprüche, **dadurch gekennzeichnet, dass** die Identifikationsinformation ein Bild der Identifikationselemente, die in dem Prüfbereich enthalten sind, enthält oder dazu dient, diese zurückzugewinnen.

40. Gegenstand nach irgendeinem der voranstehenden Ansprüche, **dadurch gekennzeichnet, dass** die Identifikationsinformation nicht unmittelbar verständlich ist, insbesondere verschlüsselt ist.

41. Gegenstand nach irgendeinem der voranstehenden Ansprüche, **dadurch gekennzeichnet, dass** er zumindest einen Träger von Informationen (8) aufweist, der dazu in der Lage ist, Identifikationsinformation zu speichern.

42. Gegenstand nach dem voranstehenden Anspruch, **dadurch gekennzeichnet, dass** der Träger von Informationen ausgewählt ist unter:
- einer optischen Einrichtung, insbesondere einem Strichcode,
- einer elektronischen Einrichtung, die dazu in der Lage ist, Informationen zu speichern, die insbesondere einen elektronischen Chip aufweist,
- eine magnetische Spur (28),
- einen optischen Speicher.

43. Gegenstand nach einem der voranstehenden Ansprüche, **dadurch gekennzeichnet, dass** sie zumindest einen Scheinhinweis (6) bzw. erscheinenden Hinweis aufweist.

44. Gegenstand nach dem voranstehenden Anspruch, **dadurch gekennzeichnet, dass** die Identifikationsinformation den Zugang zu einer Information erlaubt, die zumindest einen Scheinhinweis bzw. erscheinenden Hinweis darstellt, der auf dem Gegenstand dargestellt ist.

45. Gegenstand nach einem der voranstehenden Ansprüche, **dadurch gekennzeichnet, dass** er zumindest ein Papiersubstrat aufweist.

46. Gegenstand nach einem der voranstehenden Ansprüche, der ohne aufgedruckte Markierung mit einer außerdem nicht-optischen Variablen ist und zumindest teilweise den Prüfbereich einschränkt oder es ermöglicht, diesen zu kennzeichnen.

47. Verfahren zur Authentisierung und zur Identifikation eines sicheren Gegenstandes, insbesondere einer Sicherheits- und/oder Wertschrift bzw. -dokuments, wobei der Gegenstand aufweist:
- zumindest eine Struktur zur Authentisierung,
- zumindest einen Prüfbereich, der zumindest teilweise durch die Struktur zur Authentisierung festgelegt ist,
- wobei in dem Prüfbereich zumindest ein von der Struktur zur Authentisierung verschiedenes Identifikationselement ist,
- wobei der Gegenstand mit zumindest einer Identifikationsinformation verknüpft ist, die zumindest ein Band bzw. einen Streifen mit zumindest einem Charakteristikum, insbesondere eines räumlichen und/oder physikalischen Prüfbereiches hat, wobei das Verfahren eine Authentisierung und eine Identifikation des Gegenstandes aufweist, wobei das Verfahren **dadurch gekennzeichnet ist, dass** die Authentisierung des Gegenstandes die nachfolgenden Schritte aufweist:
- die Struktur zur Authentisierung (4; 11; 22; 32; 42; 51) wird insbesondere mit nacktem Auge basierend auf Reflektion und/oder durch Transparenz bei einer gegebenen Beleuchtungsbedingung beobachtet,
- aufgrund der Beobachtung wird gefolgert, was die Authentizität des Gegenstandes betrifft, und **dadurch**, dass die Identifikation des Gegenstandes die folgenden Schritte umfasst:
- das Charakteristikum des Prüfbereiches des Gegenstandes, der ein Band bzw. einen Streifen mit der Identifikationsinformation hat, wird mit zumindest einem Charakteristikum verglichen, das von dem Prüfbereich des Gegenstandes an erhalten wird,
- zumindest auf der Grundlage des Vergleiches wird betreffend die Identität des Gegenstandes geschlossen.

48. Verfahren nach dem voranstehenden Anspruch, **dadurch gekennzeichnet, dass** die Identifikation des Gegenstandes auf eine automatisierte Weise verwirklicht wird.

49. Verfahren nach einem der Ansprüche 47 und 48, **dadurch gekennzeichnet, dass** es den folgenden Schritt aufweist:
- der Prüfbereich wird durch Analyse des Bildes des Gegenstandes **gekennzeichnet**.

50. Verfahren nach einem der Ansprüche 47 bis 49, wobei der Gegenstand die Identifikationsinformation aufweist und diese aufgrund der Identifikation des Gegenstandes gelesen wird, bevor das Charakteristikum des Prüfbereiches mit der Identifikationsinformation verglichen wird, wobei die Identifikation des Gegenstandes den folgenden Schritt aufweist:
- die Anordnung der Identifikationselemente in dem Prüfbereich des Gegenstandes wird mit einem wiedergewonnenen Bild aufgrund der Identifikationsinformation verglichen.

51. Verfahren nach einem der Ansprüche 47 bis 50, **dadurch gekennzeichnet, dass** die Identifikation des Gegenstandes die folgenden Schritte aufweist
- die Stärke eines Signals wird gemessen und/oder die Art eines Signals, die durch die Identifikationselemente in der Prüfzone erzeugt wird, insbesondere wenn die Identifikationselemente einer externen Anregung ausgesetzt werden, wird bestimmt,
- die Stärke des gemessenen Signals und/oder die Art des Signals wird mit einem wiedergewonnenen gegebenen aufgrund der Identifikationsinformation verglichen.

52. Verfahren nach irgendeinem der Ansprüche 45 bis 51, wobei der Gegenstand zumindest einen Scheinhinweis bzw. erscheinenden Hinweis aufweist, wobei das Verfahren die folgenden Schritte aufweist:
- eine für den erscheinenden Hinweis bzw. Scheinhinweis repräsentative Information wird mit dem Scheinhinweis bzw. erscheinenden Hinweis selbst, der auf dem Gegenstand erscheint, verglichen,
- auf die Authentizität und/oder die Identität des Gegenstandes wird zumindest aufgrund des Vergleiches geschlossen.

53. System zur Authentisierung und/oder zur Identifikation (100) eines sicheren Gegenstandes, insbesondere einer Sicherheits- und/oder Wertschrift bzw. -dokuments, wobei der Gegenstand aufweist:
- zumindest eine Struktur zur Authentisierung,
- zumindest einen Prüfbereich, der zumindest teilweise durch die Struktur zur Authentisierung festgelegt ist,
- zumindest ein Identifikationselement in dem Prüfbereich, das von der Struktur zur Authentisierung verschieden ist, wobei der Gegenstand zumindest eine Identifikationsinformation vorzuweisen hat, die einen Streifen bzw. ein Band mit zumindest einem Charakteristikum, insbesondere einem räumlichen und/oder physikalischen, des Prüfbereiches und insbesondere des besagten zumindest einen Identifikationselementes hat,
wobei das System aufweist:
- insbesondere optische Mittel zur Analyse des Bildes (103), die angeordnet sind, um den Prüfbereich des Gegenstand zu kennzeichnen,
- Mittel zum Beschaffen (104) eines insbesondere räumlichen und/oder physikalischen Charakteristikums des Prüfbereiches und insbesondere des oder der Identifikationselemente in dem Prüfbereich, die durch die Mittel zur Analyse des Bildes **gekennzeichnet** worden sind,
- wahlweise eine Behandlungseinheit (105), die angeordnet ist, um das Charakteristikum des Prüfbereiches des Gegenstandes, das in einem Band bzw. Streifen mit der Identifikationsinformation ist, mit zumindest einem Charakteristikum, das mittels der Beschaffungsmittel erhalten worden ist, zu vergleichen.

54. Blattmaterial, das aufweist:
- zumindest eine erste Struktur zur Authentisierung von einem ersten Typ,
- zumindest einen ersten Prüfbereich, der zumindest teilweise durch die erste Struktur zur Authentisierung festgelegt wird,
- zumindest mehrere zweite Strukturen zur Authentisierung von einem zweiten Typ, der sich von dem ersten unterscheidet, wobei jede zweite Struktur zur Authentisierung z.B. eine Faser oder einen Flecken aufweist, wobei die zweiten Strukturen zur Authentisierung bevorzugt in einer zufälligen Weise im Inneren des ersten Prüfbereiches verstreut sind,
- zumindest einen zweiten Prüfbereich, der zumindest teilweise durch die zumindest eine der zweiten Strukturen zur Authentisierung festgelegt ist, die z.B. durch den Umriss einer zweiten Struktur zur Authentisierung festgelegt wird,
- zumindest ein Element zur Identifikation in dem zweiten Prüfbereich, das von der zweiten Struktur zur Authentisierung verschieden ist.

55. Verfahren zur Herstellung einer Sicherheits- und/oder Wertschrift bzw. -dokuments auf der Grundlage eines Blattmaterials, wobei das Blattmaterial aufweist:
- zumindest ein Substrat,
- zumindest eine Struktur zur Authentisierung,
- zumindest einen Prüfbereich, der zumindest teilweise durch die Struktur zur Authentisierung festgelegt wird,
- zumindest ein Identifikationselement in dem Prüfbereich, das von der Struktur zur Authentisierung verschieden ist,
wobei das Verfahren den nachfolgenden Schritt aufweist:
- das Blattmaterial wird mit zumindest einer Identifikationsinformation, die ein Band bzw. einen Streifen mit zumindest einem insbesondere räumlichen und/oder physikalischen Charakteristikum des Prüfbereiches, und insbesondere von dem zumindest ein Identifikationselement des Prüfbereiches hat, ausgerüstet.

56. Blattmaterial, das aufweist:
- zumindest ein Substrat,
- zumindest eine Struktur zur Authentisierung, die aus einem Stück mit dem Substrat und sichtbar ist, insbesondere eine Faser oder ein Fleckchen oder eine Gruppe von Fasern und/oder Fleckchen,
- zumindest ein Prüfbereich, der zumindest teilweise durch die Struktur zur Authentisierung, insbesondere durch den Umriss der Faser oder des Fleckchens festgelegt ist,
- zumindest ein Identifikationselement in dem Prüfbereich, das sich von der Struktur zur Authentisierung unterscheidet, wobei das Identifikationselement aktive Teilchen oder ein aktives Material aufweist.
